# EUROPEAN PATENT APPLICATION

(11) **EP 4 588 957 A1**
(43) Date of publication of application: **23.07.2025**
(21) Application number: 23865375.2
(22) Date of filing: 06.09.2023
(51) Int. Cl.: C08G 81/00, C08G 65/40, H01B 1/06, H01M 8/10, H01M 8/1018

(54) **BLOCK COPOLYMER, POLYMER ELECTROLYTE MATERIAL USING SAME, POLYMER ELECTROLYTE MOLDED ARTICLE, POLYMER ELECTROLYTE MEMBRANE, CATALYST-COATED ELECTROLYTE MEMBRANE, MEMBRANE ELECTRODE COMPOSITE BODY, SOLID POLYMER FUEL CELL, AND WATER ELECTROLYTIC HYDROGEN GENERATOR**

(30) Priority: 13.09.2022 JP 2022145023
(71) Applicant: Toray Industries, Inc., Tokyo 103-8666 (JP)
(72) Inventor: MURAKAMI Kazuho, Otsu-shi, Shiga 520-8558 (JP); IZUHARA Daisuke, Otsu-shi, Shiga 520-8558 (JP)
(74) Representative: Hoefer & Partner Patentanwälte mbB
(86) International application number: PCT/JP2023/032489
(87) International publication number: WO 2024/058020

(57) **Abstract**

A block copolymer including one or more segments containing an ionic group (hereinafter referred to as an "ionic segment(s)") and one or more segments containing no ionic group (hereinafter referred to as a "nonionic segment(s)"), wherein the ionic segment has an aromatic hydrocarbon polymer having a number-average molecular weight of more than 40,000 and 50,000 or less, and wherein the block copolymer satisfies the relation of: Mn3 / (Mn1 + Mn2) > 1.5, wherein Mn1 represents the number-average molecular weight of the ionic segment, Mn2 represents the number-average molecular weight of the nonionic segment, and Mn3 represents the number-average molecular weight of the block copolymer. Provided is a block copolymer and a polymer electrolyte material produced using the same, wherein the block copolymer has excellent proton conductivity even under low-humidity conditions, has excellent mechanical strength and physical durability, and has an excellent in-process capability.

## Description

### Technical Field

The present invention relates to a block copolymer and to a polymer electrolyte material, molded polymer electrolyte product, polymer electrolyte membrane, catalyst coated membrane, membrane electrode assembly, polymer electrolyte fuel cell, and water electrolysis hydrogen generator that are produced using the block copolymer.

### Background Art

Fuel cells are a kind of power generator from which electric energy is extracted by electrochemical oxidation of a fuel such as hydrogen or methanol, and have recently attracted attention as a clean energy source. Above all, polymer electrolyte fuel cells have a low standard operating temperature of around 100°C and a high energy density. Therefore, polymer electrolyte fuel cells are expected to be widely used for relatively small distributed power generation facilities as well as for power generators for mobile objects such as automobiles and ships. In addition, polymer electrolyte fuel cells have also attracted attention as a power source for small mobile devices and portable devices, and are expected to be substitute applications for secondary batteries such as nickel-hydrogen batteries and lithium-ion batteries in mobile phones and personal computers.

A fuel cell usually includes, as a unit, a cell including a membrane electrode assembly (MEA) sandwiched between separators. In the MEA, catalyst layers are arranged on both sides of an electrolyte membrane, and gas diffusion layers are further arranged on both sides of the resulting laminate. In the MEA, the catalyst layers and the gas diffusion layers that are arranged on both sides of the electrolyte membrane form a pair of electrode layers, and one of the electrode layers is an anode electrode and the other is a cathode electrode. A fuel gas containing hydrogen comes into contact with the anode electrode, and the air comes into contact with the cathode electrode, whereby electric power is generated by an electrochemical reaction. The electrolyte membrane is mainly made from a polymer electrolyte material. The polymer electrolyte material is also used as a binder for the catalyst layer.

Conventionally, "Nafion" (registered trademark) (manufactured by The Chemours Company), which is a fluoropolymer electrolyte, has been widely used as a polymer electrolyte material. On the other hand, an inexpensive hydrocarbon electrolyte material that can be used in place of "Nafion" (registered trademark) and that is excellent in membrane characteristics has been actively developed in recent years. A hydrocarbon electrolyte material excels in low gas permeability and heat resistance, and studies have actively been made particularly on an electrolyte material produced using an aromatic polyether ketone or an aromatic polyether sulfone. However, a conventional hydrocarbon electrolyte material exhibits the same or superior degree of power generation performance under high-humidity conditions, compared with a fluorine electrolyte material, but has insufficient power generation performance under low-humidity conditions.

A block copolymer composed of a segment containing an ionic group (hereinafter referred to as an "ionic segment") and a segment containing no ionic group (hereinafter referred to as a "nonionic segment") is suggested as a hydrocarbon polymer electrolyte material having excellent power generation performance even under low-humidity conditions, and having excellent mechanical strength and chemical stability (see, for example, Patent Literature 1 and 2). In particular, Patent Literature 2 discloses an aromatic polyether sulfone containing a segment having a number-average molecular weight of 80,000 as an ionic segment.

### Citation List

### Patent Literature

Patent Literature 1: WO2013/002274
Patent Literature 2: JP2007-109638A

### Summary of Invention

### Technical Problem

However, with the use of a block copolymer described in Patent Literature 1 and 2, the effect of enhancing the power generation performance and mechanical strength under low-humidity conditions is still not complete, and such a block copolymer and a polymer electrolyte material produced using the same are desired to be further improved so as to be industrially useful.

In view of the background of such a conventional technology, an object of the present invention is to develop a block copolymer having excellent power generation performance under low-humidity conditions, having excellent mechanical strength and physical durability, and also having excellent in-process capability, and develop a polymer electrolyte material produced using the block copolymer.

### Solution to Problem

The present inventors have vigorously made studies on the above-described problems, and consequently discovered that suitably regulating the molecular chain length of each of a segment containing an ionic group and a segment containing no ionic group results in obtaining a block copolymer the power generation performance of which under low-humidity conditions is enhanced, and the in-process capability of which is excellent.

The present invention has the following constituents.
[1] A block copolymer including one or more segments containing an ionic group (hereinafter referred to as an "ionic segment(s)") and one or more segments containing no ionic group (hereinafter referred to as a "nonionic segment(s)"), wherein the ionic segment has an aromatic hydrocarbon polymer having a number-average molecular weight of more than 40,000 and 50,000 or less, and wherein the block copolymer satisfies the relation of: Mn3 / (Mn1 + Mn2) > 1.5, wherein Mn1 represents the number-average molecular weight of the ionic segment, Mn2 represents the number-average molecular weight of the nonionic segment, and Mn3 represents the number-average molecular weight of the block copolymer.
[2] The block copolymer according to [1], wherein the heat of crystallization of the block copolymer is 0.1 J/g or more as measured by differential scanning calorimetry, or wherein the crystallinity of the block copolymer is 0.5% or more as measured by wide-angle X-ray diffraction.
[3] The block copolymer according to [1] or [2], wherein the aromatic hydrocarbon polymer is an aromatic polyether polymer.
[4] The block copolymer according to [3], wherein the aromatic polyether polymer is an aromatic polyether ketone polymer.
[5] The block copolymer according to any one of [1] to [4], wherein the block copolymer comprises a linker site that links the ionic segment with the nonionic segment.
[6] The block copolymer according to any one of [1] to [5], which satisfies the relation of: 2 < Mn1 / Mn2 < 7.
[7] The block copolymer according to any one of [1] to [6], wherein the ionic segment has a structure represented by the following general formula (S1):
   [Chem. 1]

   *-Ar¹-Y¹-Ar²-O-Ar³-Y²-Ar⁴-O-* (S1)

   (In the general formula (S1), Ar¹ to Ar⁴ independently represent a substituted or unsubstituted arylene group, and at least one of Ar¹ to Ar⁴ has an ionic group. Y¹ and Y² independently represent a ketone group or a protective group that may be induced to a ketone group. The symbol * represents a bond with the general formula (S1) or with another constituent unit.)
[8] The block copolymer according to [7], wherein the structure represented by the general formula (S1) is a structure represented by the following general formula (S2): 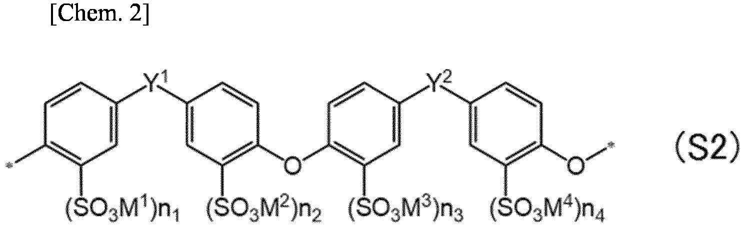 (In the general formula (S2), Y¹ and Y² independently represent a ketone group or a protective group that may be induced to a ketone group. M¹ to M⁴ independently represent a hydrogen atom, metal cation, or ammonium cation. n₁ to n₄ are independently 0 or 1, and at least one of n₁ to n₄ is 1. The symbol * represents a bond with the general formula (S2) or with another constituent unit.)
[9] The block copolymer according to any one of [1] to [8], wherein the nonionic segment contains an aromatic polyether polymer.
[10] The block copolymer according to [9], wherein the aromatic polyether polymer is an aromatic polyether ketone polymer.
[11] The block copolymer according to any one of [1] to [9], which the nonionic segment has a structure represented by the following general formula (S3):
   [Chem. 3]

   *-Ar⁵-Y³-Ar⁶-O-Ar⁷-Y⁴-Ar⁸-O-* (S3)

   (In the general formula (S3), Ar⁵ to Ar⁸ independently represent an arylene group with the proviso that none of Ar⁵ to Ar⁸ has an ionic group. Y³ and Y⁴ independently represent a ketone group or a protective group that may be induced to a ketone group. The symbol * represents a bond with the general formula (S3) or with another constituent unit.)
[12] The block polymer according to [11], wherein the structure represented by the general formula (S3) is a structure represented by the following general formula (S4): 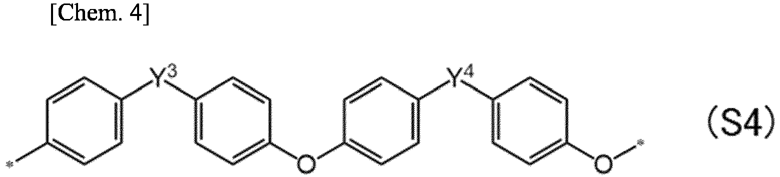 (In the general formula (S4), Y³ and Y⁴ independently represent a ketone group or a protective group that may be induced to a ketone group. The symbol * represents a bond with the general formula (S4) or with another constituent unit.)
[13] The block copolymer according to any one of [1] to [12], including a co-continuous phase-separation structure.
[14] A polymer electrolyte material including the block copolymer according to any one of [1] to [13].
[15] A molded polymer electrolyte product including the polymer electrolyte material according to [14].
[16] A polymer electrolyte membrane produced using the polymer electrolyte material according to [14].
[17] A catalyst coated membrane constituted using the polymer electrolyte membrane according to [16].
[18] A membrane electrode assembly constituted using the polymer electrolyte membrane according to [16].
[19] A polymer electrolyte fuel cell constituted using the polymer electrolyte membrane according to [16].
[20] A water electrolysis hydrogen generator constituted using the polymer electrolyte membrane according to [16].

### Advantageous Effects of Invention

Owing to suitably controlling the molecular weight of a segment contained in the block, a block copolymer according to the present invention can exhibit excellent in-process capability as a block copolymer, and can have good physical durability in the form of a polymer electrolyte material, and simultaneously achieve high power generation performance under conditions including low-humidity.

In the present invention, having good mechanical strength and physical durability means having good dimensional stability, and having good dimensional stability means having a smaller rate of dry-wet dimensional change. The rate of dry-wet dimensional change can be measured by the method described in Examples.

### Description of Embodiments

Embodiments of the present invention will now be described in detail, and the present invention is not limited to the below-described embodiments, and can be performed with various modifications in accordance with the purpose or usage.

### [Block Copolymer]

A block copolymer according to the present invention is a block copolymer including one or more ionic segment(s) and one or more nonionic segment(s), wherein the ionic segment has an aromatic hydrocarbon polymer having a number-average molecular weight of more than 40,000 and 50,000 or less, and wherein the block copolymer satisfies the relation of: Mn3 / (Mn1 + Mn2) > 1.5, wherein Mn1 represents the number-average molecular weight of the ionic segment, Mn2 represents the number-average molecular weight of the nonionic segment, and Mn3 represents the number-average molecular weight of the block copolymer.

In the present invention, the segment is a partial structure of a macromonomer in the block copolymer, in which the macromonomer is used to synthesize the block copolymer. A block copolymer according to the present invention contains a nonionic segment(s) together with an ionic segment(s). In this regard, the nonionic segment is termed so in the present invention, but the segment may contain an ionic group in a small amount in the range that does not adversely affect the effects of the present invention. Hereinafter, "containing no ionic group" and "nonionic" are used in the same meaning in some cases.

In this regard, "the ionic segment has an aromatic hydrocarbon polymer having a number-average molecular weight of more than 40,000 and 50,000 or less" has the same meaning as "the ionic segment has an aromatic hydrocarbon polymer structure, in which the number-average molecular weight of the ionic segment is more than 40,000 and 50,000 or less".

The number-average molecular weight and the weight-average molecular weight in the present invention are each defined as a value measured in terms of standard polystyrene using gel permeation chromatography (GPC), as described in the below-described Examples.

In cases where the ionic segment contains a protective group, the number-average molecular weight of the ionic segment before deprotection is defined as Mn1. In cases where the block copolymerization is performed using a precursor of the ionic segment, the number-average molecular weight of the ionic segment precursor is defined as Mn1. The number-average molecular weight of the ionic segment after being deprotected and the number-average molecular weight of the ionic segment after being converted to the ionic segment from the ionic segment precursor can be calculated on the basis of a segment completely deprotected and a segment completely converted from the precursor respectively in accordance with the structural formulae applicable before and after the deprotection and the conversion respectively.

In cases where the nonionic segment and the block copolymer each contains a protective group, the number-average molecular weight of the nonionic segment before being deprotected and the number-average molecular weight of the block copolymer before being deprotected are each defined as Mn2 and Mn3 respectively.

In cases where Mn1 is more than 40,000, the polymer electrolyte material containing the block copolymer exhibits excellent power generation performance under low-humidity conditions.

In general, the power generation performance correlates with the proton conductivity. The proton conductivity is in a positive correlation with the ion exchange capacity, but the polymer electrolyte material containing a block copolymer according to the present invention, based on comparison among such block copolymers having approximately the same ion exchange capacity, exhibits high proton conductivity in cases where Mn1 is more than 40,000. Mn1 is preferably more than 42,000, more preferably 43,000 or more, still more preferably 44,000 or more, particularly preferably 45,000 or more. With Mn1 at 50,000 or less, the block copolymer has excellent in-process capability, as follows: the degree of difficulty of synthesis is low; there is no need for a complicated step, such as precise adjustment of the amount of a monomer to be preliminarily prepared, control of a synthesis temperature, or sequential addition of a monomer; synthesis can be easily performed through a common polycondensation reaction or coupling reaction.

As Mn2 increases, the crystallinity of the block copolymer increases, and the water resistance and the physical durability increase. Thus, Mn2 is preferably 7,000 or more, more preferably 9,000 or more. In addition, Mn2 is preferably 40,000 or less, more preferably 35,000 or less, particularly preferably 30,000 or less.

As Mn3 increases, the mechanical strength of the block polymer increases. Thus, Mn3 is preferably 60,000 or more, more preferably 100,000 or more. The upper limit is preferably 300,000 or less.

In cases where a block copolymer according to the present invention satisfies the relation of: Mn3 / (Mn1 + Mn2) > 1.5, phase separation advantageous for achieving both proton conductivity and mechanical strength is more easily formed in a polymer electrolyte material containing the block copolymer, and thus, both high power generation performance and durability under low-humidity conditions can be more easily achieved. The relation of: Mn3 / (Mn1 + Mn2) ≥ 1.7 is more preferably satisfied, and the relation of: Mn3 / (Mn1 + Mn2) ≥ 1.9 is still more preferably satisfied. The upper value of Mn3 / (Mn1 + Mn2) is preferably 10.0 or less, more preferably 8.0 or less, still more preferably 5.0 or less.

A block copolymer according to the present invention can achieve particularly high power generation performance and mechanical strength when the number-average molecular weight of the ionic segment is more than 40,000, and at the same time, the above-described relation of: Mn3 / (Mn1 + Mn2) > 1.5 is satisfied.

A block copolymer according to the present invention preferably has a phase-separation structure, and simultaneously has crystallinity, from the viewpoints of dimensional stability and mechanical strength. In general, the dimensional stability and the mechanical strength are in a negative correlation with the ion exchange capacity, but a polymer electrolyte material containing a block copolymer according to the present invention, based on comparison among such block copolymers having approximately the same ion exchange capacity, has crystallinity, thus making it possible to achieve a high dimensional stability.

Whether the polymer electrolyte has crystallinity can be verified by differential scanning calorimetry (DSC) or wide-angle X-ray diffraction. Here, having crystallinity means that the heat of crystallization of the block copolymer is 0.1 J/g or more, as measured by differential scanning calorimetry, or that the crystallinity of the block copolymer is 0.5% or more, as measured by wide-angle X-ray diffraction. That is, in the present invention, "having crystallinity" means that the polymer has a possibility of being crystallized when heated, has a crystallizable property, or has already been crystallized. In addition, an amorphous polymer means that the polymer is not crystalline, or that the polymer substantially does not become crystallized. Accordingly, even if a polymer is crystalline, but if the polymer is not crystallized sufficiently, the state of the polymer at this point of time is an amorphous state in some cases.

### [Ionic Segment]

A block copolymer according to the present invention contains an ionic segment having an aromatic hydrocarbon polymer structure. Being a hydrocarbon means being other than a perfluoro substance, and an aromatic hydrocarbon polymer means a polymer other than a perfluoro polymer, and constituted mainly of an aromatic ring.

In the present invention, the aromatic ring contained in the aromatic hydrocarbon polymer may contain not only a hydrocarbon aromatic ring but also a hetero ring. In addition, the polymer may be constituted partially of an aliphatic unit together with the aromatic ring unit. Specific examples of the aromatic hydrocarbon polymer include polymers having, in the main chain, a structure selected from polysulfone, polyether sulfone, polyphenylene oxide, a polyarylene ether polymer, polyphenylene sulfide, polyphenylene sulfide sulfone, polyparaphenylene, a polyarylene polymer, polyarylene ketone, polyether ketone, polyarylene phosphine phoxide, polyether phosphine phoxide, polybenzoxazole, polybenzothiazole, polybenzimidazole, polyamide, polyimide, polyetherimide, and polyimidesulfone together with an aromatic ring. Among these, the aromatic hydrocarbon polymer is preferably an aromatic polyether polymer from the viewpoints of cost and polymerizability.

An aromatic polyether polymer refers to a polymer constituted mainly of an aromatic ring, in which polymer the repeating unit contains at least an ether bond as a mode of linking an aromatic ring unit. Examples of the aromatic polyether polymer structure include, but are not limited to, an aromatic polyether, aromatic polyether ketone, aromatic polyether ether ketone, aromatic polyether ketone ketone, aromatic polyether ether ketone ketone, aromatic polyether ketone ether ketone ketone, aromatic polyether imide, aromatic polyether sulfone, and the like. The aromatic polyether polymer is preferably an aromatic polyether ketone polymer or a polyether sulfone polymer from the viewpoints of chemical stability and cost, and is most preferably an aromatic polyether ketone polymer from the viewpoints of mechanical strength, dimensional stability, and physical durability.

An aromatic polyether ketone polymer refers to a polymer constituted mainly of an aromatic ring, in which polymer the repeating unit contains at least an ether bond and a ketone bond as modes of linking an aromatic ring unit.

An aromatic polyether sulfone polymer refers to a polymer constituted mainly of an aromatic ring, in which polymer at least an ether bond and a sulfone bond are contained as modes of linking an aromatic ring unit.

A method of adjusting Mn1 to more than 40,000 and 50,000 or less is not particularly limited, but is subject to being capable of achieving a molecular weight of interest, and is, for example, a method in which a segment is synthesized through an aromatic nucleophilic substitution reaction or a coupling reaction. The synthesis through an aromatic nucleophilic substitution reaction is easier from a process viewpoint, and thus, is preferable.

In a block copolymer according to the present invention, the ionic segment preferably contains a structure represented by the following general formula (S1), from the viewpoints of dimensional stability, mechanical strength, and chemical stability.

[Chem. 5]

*-Ar¹-Y¹-Ar²-O-Ar³-Y²-Ar⁴-O-* (S1)

In the general formula (S1), Ar¹ to Ar⁴ independently represent a substituted or unsubstituted arylene group, and at least one of Ar¹ to Ar⁴ has an ionic group. Y¹ and Y² independently represent a ketone group or a protective group that may be induced to a ketone group. The symbol * represents a bond with the general formula (S1) or with another constituent unit. In addition, the ionic segment may contain a structure other than represented by the general formula (S1).

Herein, examples of the aromatic ring preferable for Ar¹ to Ar⁴ include, but are not limited to: hydrocarbon arylene groups such as a phenylene group, naphthylene group, biphenylene group, and fluorenediyl group; and heteroarylene groups such as pyridinediyl, quinoxalinediyl, and thiophenediyl; and the like.

The ionic group to be used for a block copolymer according to the present invention is preferably an atomic group having a negative charge, and preferably has a proton exchange capability. Such a functional group is preferably a sulfonic group, sulfonimide group, sulfate group, phosphonic group, phosphate group, or carboxylic group, as described below.

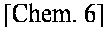

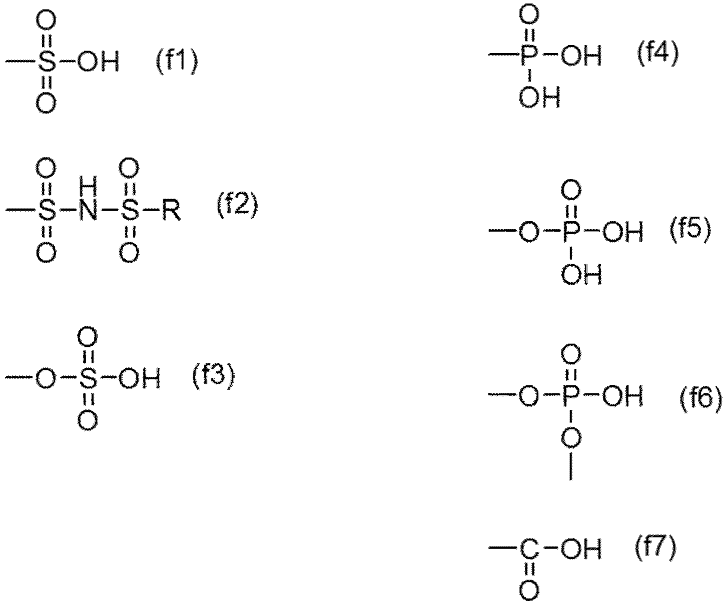

Such an ionic group encompasses the above-described functional groups (f1) to (f7) formed into a salt. Examples of a cation that forms such a salt include an arbitrary metal cation, NR₄⁺ (wherein R is an arbitrary organic group), and the like. Without particular limitation, the metal cation is preferably Na, K, or Li which is inexpensive, and can easily undergo proton exchange.

The block copolymer can contain two or more of these ionic groups, the combination of which can be suitably determined in accordance with the polymer structure or the like. Above all, it is more preferable that the polymer contains at least a sulfonic group, a sulfonimide group, or a sulfate group, from the viewpoint of high proton conductivity, and it is most preferable that the polymer contains a sulfonic group, from the viewpoint of raw material cost.

In a block copolymer according to the present invention, a structure represented by the general formula (S1) is preferably a structure represented by the following general formula (P1), from the viewpoints of dimensional stability and raw material availability, and still more preferably a structure represented by the following general formula (S2), from the viewpoints of raw material availability and polymerizability.

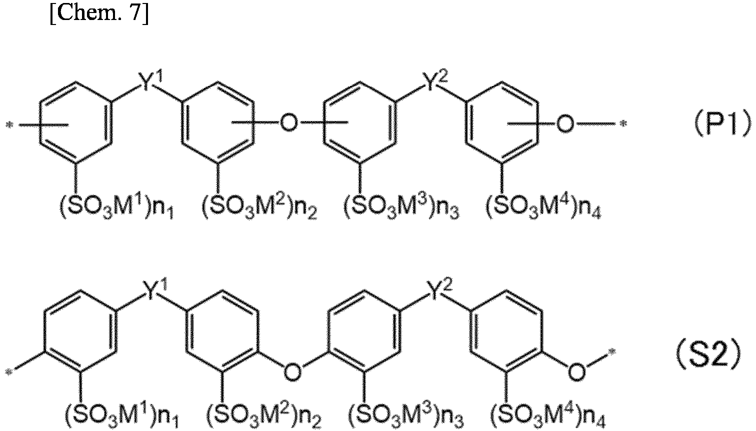

In the general formulae (P1) and (S2), Y¹ and Y² independently represent a ketone group or a protective group that may be induced to a ketone group. M¹ to M⁴ independently represent a hydrogen atom, metal cation, or ammonium cation. n₁ to n₄ are independently 0 or 1, and at least one of n₁ to n₄ is 1. The symbol * represents a bond with the general formulae (P1) and (S2) or with another constituent unit.

Furthermore, from the viewpoints of raw material availability and polymerizability, n₁ = 1, n₂ = 1, n₃ = 0, and n₄ = 0, or n₁ = 0, n₂ = 0, n₃ = 1, and n₄ = 1 are most preferable.

The amount of a constituent unit represented by the general formula (S1) and contained in the ionic segment is more preferably 20 mol% or more, still more preferably 50 mol% or more, most preferably 80 mol% or more.

Examples of an ionic monomer to be used to synthesize such an ionic segment as above-described include an aromatic activated dihalide compound.

From the viewpoints of chemical stability, production cost, and the possibility of precisely controlling the amount of an ionic group, it is preferable that an aromatic activated dihalide compound having an ion acid group introduced thereinto is used as an aromatic activated dihalide compound to be used in the ionic segment. Suitable specific examples of the monomer having a sulfonic group as an ionic group include, but are not limited to, 3,3'-disulfonate-4,4'-dichlorodiphenyl sulfone, 3,3'-disulfonate-4,4'-difluorodiphenyl sulfone, 3,3'-disulfonate-4,4'-dichlorodiphenyl ketone, 3,3'-disulfonate-4,4'-difluorodiphenyl ketone, 3,3'-disulfonate-4,4'-dichlorodiphenylphenylphosphine oxide, 3,3'-disulfonate-4,4'-difluorodiphenylphenylphosphine oxide, and the like.

From the viewpoints of proton conductivity and hydrolysis resistance, the ionic group is most preferably a sulfonic group, but the monomer having the above-described ionic group may have another ionic group.

Among the above-described monomers having a sulfonic group, 3,3'-disulfonate-4,4'-dichlorodiphenyl ketone and 3,3'-disulfonate-4,4'-difluorodiphenyl ketone are more preferable from the viewpoints of chemical stability and physical durability, and 3,3'-disulfonate-4,4'-difluorodiphenyl ketone is most preferable from the viewpoint of polymerization activity.

An ionic segment synthesized using, 3,3'-disulfonate-4,4'-dichlorodiphenyl ketone or 3,3'-disulfonate-4,4'-difluorodiphenyl ketone as a monomer having an ionic group contains a constituent unit represented by the following general formula (p1), and is preferably used. The aromatic polyether polymer structure is a component not only characterized by the high crystallinity possessed by a ketone group but also having better hot-water resistance than a sulfone group, is a component effective for a material having excellent dimensional stability, mechanical strength, and physical durability under high-temperature and high-humidity conditions, and thus, is still more preferably used. These sulfonic groups during polymerization are each preferably in the form of a salt with a monovalent cationic species. The monovalent cationic species may be sodium, potassium, another metal species, various amines, or the like, and is not limited to these. These aromatic activated dihalide compounds can be used singly, and a plurality of aromatic activated dihalide compounds can be used in combination.

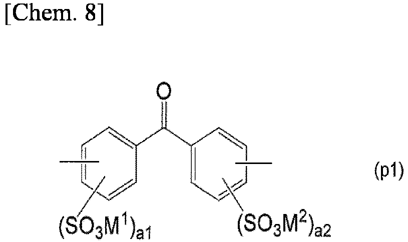

(In the general formula (p1), M¹ and M² represent a hydrogen, metal cation, or ammonium cation, and a1 and a2 represent an integer of 1 to 4. A constituent unit represented by the general formula (p1) may be optionally substituted.)

In addition, copolymerizing aromatic activated dihalide compounds, one having an ionic group and the other having no ionic group, makes it possible to control the density of the ionic group. However, from the viewpoint of securing the continuity of the proton conduction path, it is more preferable that, in the ionic segment, an aromatic activated dihalide compound having no ionic group is not copolymerized.

More suitable specific examples of the aromatic activated dihalide compound having no ionic group include 4,4'-dichlorodiphenyl sulfone, 4,4'-difluorodiphenyl sulfone, 4,4'-dichlorodiphenyl ketone, 4,4'-difluorodiphenyl ketone, 4,4'-dichlorodiphenylphenylphosphine oxide, 4,4'-difluorodiphenylphenylphosphine oxide, 2,6-dichlorobenzonitrile, 2,6-difluorobenzonitrile, and the like. Among these, 4,4'-dichlorodiphenyl ketone and 4,4'-difluorodiphenyl ketone are more preferable from the viewpoints of crystallization, mechanical strength, physical durability, and hot-water resistance, and 4,4'-difluorodiphenyl ketone is most preferable from the viewpoint of polymer activity. These aromatic activated dihalide compounds can be used singly, and a plurality of aromatic activated dihalide compounds can be used in combination.

A polymer electrolyte material synthesized using 4,4'-dichlorodiphenyl ketone or 4,4'-difluorodiphenyl ketone as an aromatic activated dihalide compound further contains a constituent site represented by the following general formula (p2), and is preferably used. The constituent unit becomes a component that affords an intermolecular cohesive force and crystallinity, becomes a material having excellent dimensional stability, mechanical strength, and physical durability under high-temperature and high-humidity conditions, and thus is preferably used.

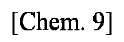

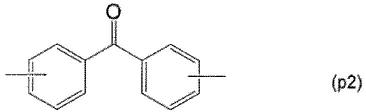

(A constituent unit represented by the general formula (p2) may be optionally substituted, but contains no ionic group.)

In addition, a nonionic monomer to be used to synthesize an ionic segment is, for example, an aromatic diphenol compound, and is preferably an aromatic diphenol compound having the below-described protective group, in particular. As above, monomers to be used to synthesize the ionic segment have been described.

Preferable examples of a structure that is other than a structure represented by the general formula (S1), and may be contained as an ionic segment or a constituent unit constituting an ionic segment include an aromatic polyether ketone copolymer structure composed of a structure represented by the following general formulae (T1) and (T2).

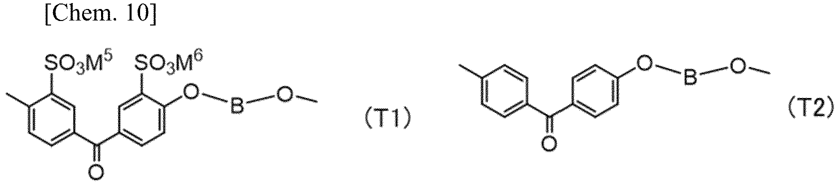

In the general formulae (T1) and (T2), B represents a divalent organic group containing an aromatic ring. M⁵ to M⁶ independently represent a hydrogen atom, metal cation, or ammonium cation.

In this aromatic polyether ketone copolymer, changing the compositional ratio of the constituent units represented by the general formulae (T1) and (T2) makes it possible to control the ion exchange capacity.

Among others, an ionic segment having a structure represented by the general formula (P1) and structures represented by the general formulae (T1) and (T2) is particularly preferable. Assuming that, in such an ionic segment, the amounts of the constituent units represented by the general formulae (P1), (T1), and (T2) are p1, t1, and t2 respectively, p1 is preferably 75 parts by mole or more, more preferably 90 parts by mole or more, still more preferably parts equal to 100 mol% or more, with respect to 100 parts by mole of the total molar amount of t1 and t2.

Examples of the divalent organic group B containing an aromatic ring in the general formulae (T1) and (T2) include: residues of various divalent phenol compounds that can be used to polymerize an aromatic polyether polymer by aromatic nucleophilic substitution reaction; and such a residue into which a sulfonic group has been introduced.

Specific suitable examples of the divalent organic group B containing an aromatic ring include, but are not limited to, a group represented by the following general formulae (X'-1) to (X'-6).

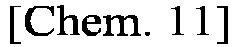

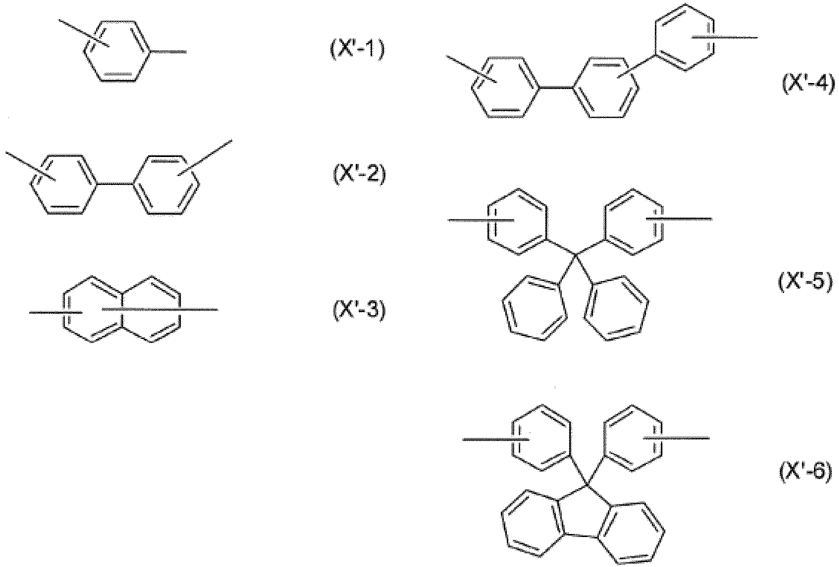

These may have an ionic group or an aromatic group. In addition, these can be used in combination, if required. Among these, groups represented by the general formulae (X'-1) to (X'-4) are more preferable, and groups represented by the general formulae (X'-2) and (X'-3) are most preferable, from the viewpoints of crystallinity, dimensional stability, toughness, and chemical stability.

### [Nonionic Segment]

In the block copolymer according to the present invention, the nonionic segment preferably has an aromatic polyether polymer structure. Examples of known aromatic polyether polymer structures include, but are not limited to, an aromatic polyether, aromatic polyether ketone, aromatic polyether ether ketone, aromatic polyether ketone ketone, aromatic polyether ether ketone ketone, aromatic polyether ketone ether ketone ketone, aromatic polyether imide, aromatic polyether sulfone, and the like. The aromatic polyether polymer contains at least an aromatic group and an ether bond as repeating unit structures.

The aromatic polyether polymer structure of the nonionic segment constituting a block copolymer according to the present invention is more preferably an aromatic polyether ketone polymer structure from the viewpoints of mechanical strength, dimensional stability, and physical durability.

The nonionic segment constituting a block copolymer according to the present invention preferably contains a structure represented by the following general formula (S3), from the viewpoints of dimensional stability, mechanical strength, and chemical stability.

[Chem. 12]

*-Ar⁵-Y³-Ar⁶-O-Ar⁷-Y⁴-Ar⁸-O-* (S3)

In the general formula (S3), Ar⁵ to Ar⁸ independently represent an arylene group with the proviso that none of Ar⁵ to Ar⁸ has an ionic group. Y³ and Y⁴ independently represent a ketone group or a protective group that may be induced to a ketone group. The symbol * represents a bond with the general formula (S3) or with another constituent unit.

Herein, examples of the aromatic ring preferable for Ar⁵ to Ar⁸ include, but are not limited to: hydrocarbon arylene groups such as a phenylene group, naphthylene group, biphenylene group, and fluorenediyl group; and heteroarylene groups such as pyridinediyl, quinoxalinediyl, and thiophenediyl; and the like.

The nonionic segment constituting a block copolymer according to the present invention preferably contains a structure represented by the following formula (P2), from the viewpoint of raw material availability. Among these, it is still more preferable to contain a constituent unit represented by the following formula (S4), from the viewpoints of mechanical strength, dimensional stability, and physical durability that are due to crystallinity.

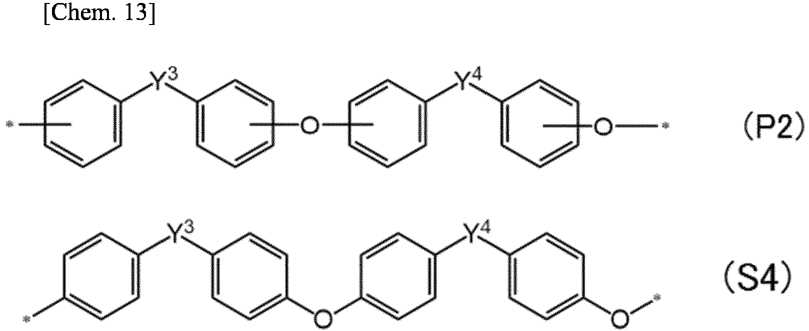

In the general formulae (P2) and (S4), Y³ and Y⁴ independently represent a ketone group or a protective group that may be induced to a ketone group. The symbol * represents a bond with the general formulae (P2) and (S4) or with another constituent unit.

The amount of a structure represented by the general formula (S3) or (S4) and contained in the nonionic segment is preferably larger, preferably 20 mol% or more, more preferably 50 mol% or more, still more preferably 80 mol% or more. The amount of 20 mol% or more makes it possible to sufficiently obtain the effects of the present invention with respect to the mechanical strength, dimensional stability, and physical durability that are due to the crystallinity.

A block copolymer according to the present invention is preferably constituted of an ionic segment containing a constituent unit represented by the above-described general formula (S1) and a block copolymer having a nonionic segment containing a constituent unit represented by the above-described general formula (S3).

In cases where the nonionic segment contains a constituent unit represented by the general formula (S3), the segment exhibits crystallinity. The block copolymer containing such a nonionic segment can be produced, for example, by molding a block copolymer precursor in which a protective group is introduced into at least a nonionic segment, and then deprotecting at least part of the protective group contained in the molded product. A block copolymer more tends to have poor processability than a random copolymer owing to the crystallization of the polymer having a domain formed therein, and accordingly, it is preferable to introduce a protective group into at least a nonionic segment to enhance the processability, and, in a case where the processability becomes poorer, a protective group is preferably introduced also into the ionic segment.

Preferable examples of such a constituent unit containing a protective group include a constituent unit containing at least one selected from the following general formulae (P3) and (P4).

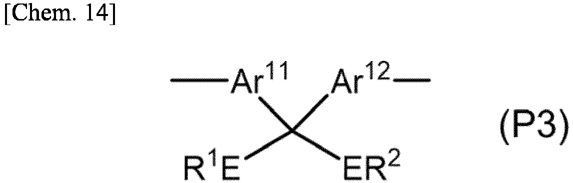

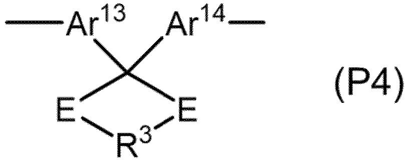

In the formulae (P3) and (P4), Ar¹¹ to Ar¹⁴ each represent an arbitrary divalent arylene group; R¹ and R² each represent at least one group selected from H or an alkyl group; R³ represents an arbitrary alkylene group; E represents O or S. Ar¹¹ to Ar¹⁴, R¹, R², R³, and E may each represent two or more groups. A group represented by the formulae (P3) and (P4) may be optionally substituted.

Among these, a method in which, in the general formulae (P3) and (P4), E is O, that is, a ketone site is protected/deprotected with a ketal site is most preferable from the viewpoints of the smell, reactivity, stability of the compound, and the like.

R¹ and R² in the general formula (P3) are more preferably an alkyl group, still more preferably a C₁₋₆ alkyl group, most preferably a C₁₋₃ alkyl group, from the viewpoint of stability. In addition, R³ in the general formula (P4) is more preferably a C₁₋₇ alkylene group, most preferably a C₁₋₄ alkylene group, from the viewpoint of stability. Specific examples of R³ include, but are not limited to, - CH₂CH₂-, -CH(CH₃)CH₂-, -CH(CH₃)CH(CH₃)-, -C(CH₃)₂CH₂-, -C(CH₃)₂CH(CH₃)-, -C(CH₃)₂O(CH₃)₂-, -CH₂CH₂CH₂-, -CH₂C(CH₃)₂CH₂-, and the like.

An organic group preferable as Ar¹¹ to Ar¹⁴ in the general formulae (P3) and (P4) is a phenylene group, naphthylene group, or biphenylene group. These may be optionally substituted. In the aromatic polyether polymer, Ar¹³ and Ar¹⁴ in the general formula (P4) are each more preferably a phenylene group from the viewpoints of solubility and easy raw material availability. Ar¹³ and Ar¹⁴ are each most preferably a *p*-phenylene group.

Here, examples of a method of protecting a ketone site with a ketal include a method in which a precursor compound having a ketone group is allowed to react with a monofunctional and/or bifunctional alcohol in the presence of an acid catalyst. For example, such a protected ketone site can be produced by allowing 4,4'-dihydroxybenzophenone as a ketone precursor to react in the presence of an acid catalyst such as hydrogen bromide in a monofunctional and/or bifunctional alcohol or a solvent of an aliphatic or aromatic hydrocarbon or the like. The alcohol is a C₁₋₂₀ aliphatic alcohol.

An improving method for producing a ketal monomer is composed of allowing 4,4'-dihydroxybenzophenone as a ketone precursor to react with a bifunctional alcohol in the presence of an alkyl ortho ester and a solid catalyst.

A method of deprotecting at least part of the ketone sites protected with ketals, and thus restoring the ketone sites is subject to no particular limitation. The deprotection reaction can be performed in the presence of water and acid under ununiform or uniform conditions, and from the viewpoints of mechanical strength, physical durability, and solvent resistance, a method in which the material is molded in membrane form or the like, and then acid-treated is more preferable. Specifically, the membrane molded can be immersed in an aqueous hydrochloric acid solution or an aqueous sulfuric acid solution to be deprotected, and the concentration of the acid and the temperature of the aqueous solution can be selected suitably.

The weight ratio of the acidic aqueous solution needed for the polymer is preferably 1 to 100, and it is possible to use an even larger amount of water. The acid catalyst is preferably used at a concentration of 0.1 to 50 wt% with respect to the water present. Examples of suitable acid catalysts include: strong mineral acids such as hydrochloric acid, nitric acid, fluorosulfonic acid, and sulfuric acid; and strong organic acids such as p-toluene sulfonic acid and trifluoromethanesulfonic acid. The acid catalyst, the amount of excess water, the reaction pressure, and the like can be selected suitably in accordance with the thickness of the polymer membrane and with the like.

For example, in cases where the membrane has a thickness of 50 µm, immersing the membrane in an acidic aqueous solution, for example, an aqueous solution of 6 N hydrochloric acid, and heating the membrane at 95°C for 1 to 48 hours makes it possible to deprotect substantially the whole amount of the membrane easily. In addition, even if the polymer is immersed in an aqueous solution of 1 N hydrochloric acid at 25°C for 24 hours, the majority of the protective groups can undergo deprotection. However, the deprotection is not limited to these conditions, and the deprotection may be performed with acidic gas, organic acid, or the like, or the deprotection may be performed by heat treatment.

In cases where the aromatic polyether polymer contains a linking mode such as a direct bond other than an ether bond, the position of the protective group to be introduced is more preferably an aromatic ether polymer portion from the viewpoint of enhancing the processability.

Specifically, for example, an aromatic polyether polymer containing a constituent unit represented by the general formulae (P3) and (P4) can be synthesized by an aromatic nucleophilic substitution reaction with an aromatic activated dihalide compound, using compounds represented by the following general formulae (P3-1) and (P4-1) respectively as aromatic diphenol compounds. The constituent unit represented by the general formulae (P3) and (P4) may be derived from either an aromatic diphenol compound or an aromatic activated dihalide compound. A constituent unit derived from an aromatic diphenol compound is more preferably used, considering the reactivity of the monomer.

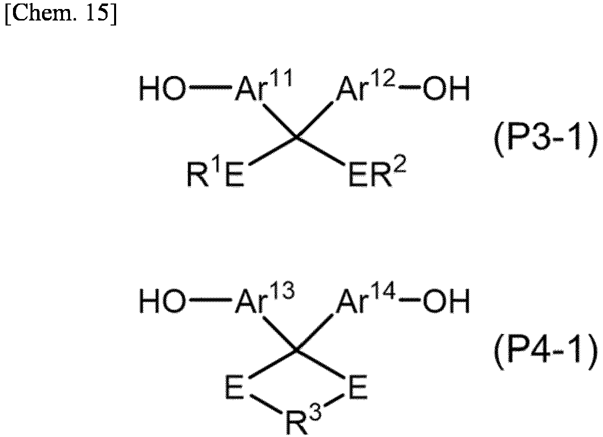

In the general formulae (P3-1) and (P4-1), Ar¹¹ to Ar¹⁴ each represent an arbitrary divalent arylene group; R¹ and R² each represent at least one group selected from H or an alkyl group; R³ represents an arbitrary alkylene group; and E represents O or S. A compound represented by the general formula (P3-1) and the general formula (P4-1) may be optionally substituted. As above, preferable protective groups have been described.

### [Detailed Description of Block Copolymer]

A block copolymer according to the present invention is a block copolymer in which two or more kinds of segment chains incompatible with each other, that is, a hydrophilic segment containing an ionic group and a hydrophobic segment containing no ionic group are linked to form one polymer chain. In the block copolymer, the short-distance interaction caused by the repulsion between chemically different segment chains causes phase separation into nano- or micro-domains composed of the respective segment chains. Then, the segment chains are covalently bound to each other, thus causing a long-distance interaction, and this effect causes each domain to be arranged in a specifically ordered manner. A higher-order structure produced by aggregation of domains composed of the respective segment chains is called a nano- or micro-phase-separation structure. Here, the domain means a mass formed by aggregation of similar segments in one or a plurality of polymer chains. For the ionic conduction of the polymer electrolyte membrane, the spatial arrangement of the ion-conductive segment in the membrane, that is, the nano- or micro-phase-separation structure is important.

The ionic segment having a number-average molecular weight Mn1 of more than 40,000 in a block copolymer according to the present invention makes it possible to obtain the effects of the invention sufficiently. This is considered to be because, as the number-average molecular weight of the ionic segment rises, the aggregability of the segment increases during the formation of a phase-separation structure, thus forming a phase-separation structure suitable for proton conduction.

Mn1 and Mn2 that satisfy 2 < Mn1 / Mn2 < 7 enable the block copolymerization reaction to progress suitably, make it possible to obtain a block copolymer having a high molecular weight, make it possible to form a phase-separation structure suitable for proton conduction, and thus, are preferable for a block copolymer according to the present invention.

From the viewpoints of block copolymerizability and the formation of a phase-separation structure, it is more preferable that the relation of: 3 ≤ Mn1 / Mn2 < 7 is additionally satisfied.

The block copolymer according to the present invention preferably contains a linker site that links the ionic segment with the nonionic segment. In the present invention, the linker is a site that links the ionic segment with the nonionic segment, and is defined as a site different in the chemical structure from the ionic segment and the nonionic segment.

This linker links different segments while inhibiting the randomization of the copolymer due to an ether exchange reaction, the scission of the segment, a side reaction that can occur during the synthesis of a copolymer, and the like. Accordingly, using, as a raw material, a compound that gives such a linker makes it possible to obtain a block copolymer without decreasing the molecular weight of each segment.

Specific suitable examples of the linker include decafluorobiphenyl, hexafluorobenzene, 4,4'-difluorodiphenyl sulfone, 2,6-difluorobenzonitrile, and the like, but are not limited to these in the present invention.

The ion exchange capacity of a block copolymer according to the present invention is preferably 0.1 to 5 meq/g, more preferably 1.5 meq/g or more, most preferably 2 meq/g or more, from the viewpoint of a balance between proton conductivity and water resistance. In addition, the ion exchange capacity is more preferably 3.5 meq/g or less, most preferably 3 meq/g or less.

The ion exchange capacity of the ionic segment is preferably higher from the viewpoint of proton conductivity under low-humidity conditions, and is preferably 2.5 meq/g or more, more preferably 3 meq/g or more, still more preferably 3.5 meq/g or more. In addition, the ion exchange capacity is preferably 6.5 meq/g or less, more preferably 5 meq/g or less, still more preferably 4.5 meq/g or less.

The ion exchange capacity of the nonionic segment is preferably lower from the viewpoints of hot-water resistance, mechanical strength, dimensional stability, and physical durability, and is preferably 1 meq/g or less, more preferably 0.5 meq/g, still more preferably 0.1 meq/g or less.

Here, the ion exchange capacity is the molar amount of an ion-exchange group introduced per unit dry weight of each of the block copolymer, polymer electrolyte material, and polymer electrolyte membrane. The ion exchange capacity can be measured by elemental analysis, neutralization titration, or the like. In cases where the ion exchange group is a sulfonic group, the IEC can be calculated from an S/C ratio using an elemental analysis method, but it is difficult to measure the IEC, for example in cases where the electrolyte material contains a sulfur source other than a sulfonic group. Accordingly, in the present invention, the ion exchange capacity is defined as a value obtained by the below-described neutralization titration method.

A block copolymer according to the present invention preferably has a phase-separation structure, particularly preferably has a co-continuous phase-separation structure. That a block copolymer according to the present invention has a phase-separation structure means that the phase-separation structure can be verified when a molded product obtained by molding the block copolymer in membrane form is observed under a transmission electron microscope (TEM).

The phase-separation structure can be formed through controlling the state of aggregation of each of the ionic segment and the nonionic segment and the shape of the aggregation. Examples of the form of the phase-separation structure include a cylindrical structure, sea-island structure, lamellar structure, and co-continuous structure. Among others, the block copolymer that is a molded product having a co-continuous structure makes it possible to form a three-dimensionally continuous proton conduction channel, and thus to achieve excellent proton conductivity. In addition, a nonionic hydrophobic segment forms a three-dimensional continuous domain in the same manner, and thus, has excellent fuel-blocking capability, solvent resistance dimensional stability, mechanical strength, and physical durability.

For a block copolymer according to the present invention, it is preferable that the phase-separation structure is recognized when observed by TEM at 50,000 times, and that the average period size metered by image processing is 8 nm or more and 300 nm or less. Among these, the average period size is more preferably 10 nm or more and 200 nm or less, most preferably 15 nm or more and 150 nm or less. The period size means the period length of a domain formed by aggregation of ionic segments and a domain formed by aggregation of nonionic segments.

### [Method of Producing Block Copolymer]

Specific methods of synthesizing a block copolymer composed of an ionic segment and a nonionic segment will be illustrated. However, the present invention is not limited to these.

Each segment to be used in the present invention is preferably synthesized by an aromatic nucleophilic substitution reaction from the viewpoint of easiness in processes. The aromatic nucleophilic substitution reaction is a method in which a monomer mixture of a dihalide compound and a diol compound is allowed to react in the presence of a basic compound. The polymerization can be performed in the temperature range of from 0 to 350°C, preferably at a temperature of 50 to 250°C.

The reaction can be performed in the presence of no solvent, but preferably performed in the presence of a solvent. Examples of solvents that can be used include: aprotic polar solvents such as N,N-dimethylacetoamide, *N,N-*dimethylformamide, N-methyl-2-pyrrolidone, dimethyl sulfoxide, sulfolane, 1,3-dimethyl-2-imidazolidinone, and hexamethylphosphon triamide. The solvent is not limited to these, and can be a solvent that can be used as a stable solvent in an aromatic nucleophilic substitution reaction. These organic solvents may be used singly or in mixture of two or more kinds thereof.

Examples of basic compounds include sodium hydroxide, potassium hydroxide, sodium carbonate, potassium carbonate, sodium hydrogencarbonate, potassium hydrogencarbonate, and the like. Without any limitation to these, a basic compound that makes it possible to form a diol into an active phenoxide structure can be used. In addition, to increase the nucleophilicity of the phenoxide, a crown ether such as 18-crown-6 is suitably added. In some cases, a crown ether coordinates to a sodium ion or potassium ion of a sulfonic group to enhance the solubility of the sulfonate moiety of a monomer or a polymer in an organic solvent, and thus, can be preferably used.

In an aromatic nucleophilic substitution reaction, water is generated as a byproduct in some cases. In this case, it is also possible that, independent of a polymerization solvent, toluene or the like is allowed to coexist in a reaction system to form an azeotrope, in the form of which water can be removed out of the system. In a method of removing water out of the system, a water absorbing agent such as a molecular sieve can be used.

A block copolymer according to the present invention can be produced, for example, by synthesizing a block copolymer precursor, and then deprotecting at least part of the protective groups contained in the precursor. A method of producing a block copolymer and a block copolymer precursor according to the present invention preferably includes at least the following steps (1) to (2). Including these steps makes it possible to achieve the enhancement of mechanical strength and durability due to a higher molecular weight, and introducing both segments alternately makes it possible to obtain a block copolymer the phase-separation structure and the domain size of which are strictly controlled, and which has excellent low-humidity proton conductivity.
(1) A step in which -OM groups at both ends of a segment are allowed to react with linker compounds to introduce linker sites into both ends of the segment, in which the segment is one of an ionic segment having -OM groups (M represents a hydrogen atom, metal cation, or ammonium cation) at both ends thereof and a nonionic segment having -OM groups at both ends thereof.
(2) A step in which the linker sites introduced into both ends of one of the segments synthesized in (1) are polymerized with the -OM groups at both ends of the other segment to produce a block copolymer or block copolymer precursor having an ionic segment and a nonionic segment.

Specific examples of the segment both ends of which are each a -OM group, and which is represented by the general formula (S1) and the segment both ends of which are each a -OM group, and which is represented by the general formula (S2) include segment structures represented by the following formulae (H3-1) and (H3-2) respectively. In addition, examples of a structure formed by allowing a segment having a structure represented by each of the formulae (H3-1) and (H3-2) to react with a halide linker include a structure represented by each of the following formulae (H3-3) and (H3-4) respectively. However, the present invention is not limited to these.

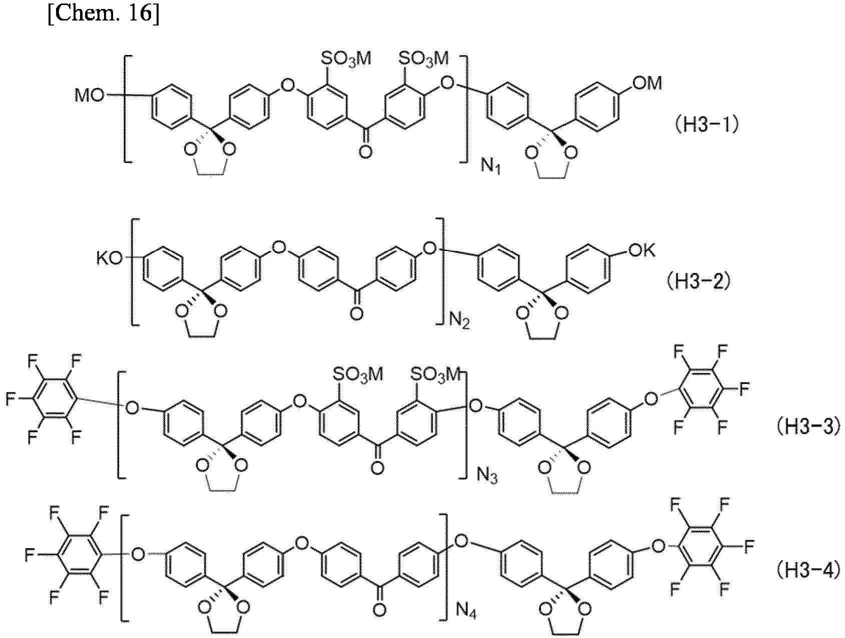

In the formulae (H3-1) to (H3-4), N₁, N₂, N₃, and N₄ independently represent an integer of 1 to 200.

In the formulae (H3-1) to (H3-4), a halogen atom is represented by F, a -OM end group is represented by a -OK group, and an alkali metal is represented by one of Na and K, but the components can be used without limitation to these. In addition, these formulae are inserted in order to help the readers' understanding, and do not always accurately represent the chemical structures, accurate compositions, and arrangements of the polymerization components of a polymer and the position, number, molecular weight, and the like of a sulfonic group. The materials are not limited to these formulae.

Furthermore, in the formulae (H3-1) to (H3-4), a ketal group is introduced as a protective group into each of the segments, but in the present invention, a protective group can be introduced into a component having high crystalline and low solubility. Accordingly, the above-described ionic segment does not always need a protective group, and an ionic segment having no protective group can be preferably used from the viewpoints of physical durability and dimensional stability.

### [Polymer Electrolyte Material]

A polymer electrolyte material according to the present invention is characterized by containing the above-described block copolymer. Suitably selecting the chemical structure, segment chain length, molecular weight, ion exchange capacity, and the like of a block copolymer according to the present invention makes it possible to control various characteristics of the polymer electrolyte material, such as processability, domain size, crystallinity/amorphousness, mechanical strength, and proton conductivity.

### [Molded Polymer Electrolyte Product]

A block copolymer according to the present invention is suitable as a polymer electrolyte material, and can be processed into a molded polymer electrolyte product produced using this polymer electrolyte material. The form of the above-described molded product is not particularly limited, and is, for example, a binder, fiber, membrane, rod, or the like in the catalyst layer of an electrode. Among these, a membrane and a binder are preferable, and a membrane is particularly preferable.

### [Polymer Electrolyte Membrane]

A polymer electrolyte membrane according to the present invention is characterized by being produced using the polymer electrolyte material containing the above-described block copolymer.

In cases where a block copolymer according to the present invention is molded into a membrane, a possible method is a method in which a membrane is formed from a solution in a stage in which the polymer has a protective group such as a ketal; a method in which a membrane is formed from the molten polymer; and the like. The former method is, for example, a method in which the polymer electrolyte material is dissolved in a solvent such as N-methyl-2-pyrrolidone, the resulting solution is applied by cast coating to a glass plate or the like, and the solvent is removed to give a membrane.

A solvent to be used to form a membrane is desirably a solvent that can dissolve a block copolymer, and then removed. Examples of the solvent to be used suitably include: aprotic polar solvents such as N,N-dimethylacetoamide, *N,N-*dimethylformamide, N-methyl-2-pyrrolidone, dimethyl sulfoxide., sulfolane, 1,3-dimethyl-2-imidazolidinone, and hexamethylphosphon triamide; ester solvents such as γ-butyrolactone and butyl acetate; carbonate solvents such as ethylene carbonate and propylene carbonate; alkylene glycol monoalkyl ethers such as ethylene glycol monomethyl ether, ethylene glycol monoethyl ether, propylene glycol monomethyl ether, and propylene glycol monoethyl ether; alcohol solvents such as isopropanol; water; and mixtures thereof. Aprotic polar solvents have the highest solubility, and are preferable. In addition, to increase the solubility of the ionic segment, a crown ether such as 18-crown-6 is suitably added.

In addition, in cases where a solution is formed into a membrane using a block copolymer in the present invention, the selection of a solvent is important with respect to the phase-separation structure, and using a mixture of an aprotic polar solvent and a solvent having low polarity is a suitable method.

A method in which a polymer solution prepared so as to have a required solid concentration is filtrated by normal pressure filtration, pressure filtration, or the like to remove foreign matter from the polymer electrolyte solution is preferable to afford a tough membrane. A filter medium to be used here is subject to no particular limitation, and is suitably a glass filter or a metallic filter. In the filtration, the minimum pore diameter that allows the polymer solution to pass through the filter is preferably 1 µm or less.

Examples of a method of converting a block copolymer according to the present invention to a polymer electrolyte membrane include a method in which a membrane constituted of the block copolymer is formed by the above-described technique, and then, at least part of the sites protected with protective groups are deprotected. For example, in cases where the material has ketal sites as protective groups, at least part of the ketone sites protected with ketals are deprotected to be restored to ketone sites. This method makes it possible to form a membrane with a solution of a block copolymer lacking in solubility, and to achieve proton conductivity together with mechanical strength and physical durability.

In addition, molding an electrolyte membrane in a state in which the ionic group contained is in the form a salt with a cation of an alkali metal or an alkaline earth metal may be followed by a step in which the cation of the alkali metal or the alkaline earth metal is exchanged with a proton. This step is preferably a step in which a membrane molded is brought in contact with an acidic aqueous solution, more preferably, in particular, a step in which a membrane molded is immersed in an acidic aqueous solution. In this step, the proton in the acidic aqueous solution is substituted with the cation that is ionically bonded to the ionic group, and residual water-soluble impurities, residual monomers, solvents, residual salts, and the like are simultaneously removed.

The acidic aqueous solution is not particularly limited, and sulfuric acid, hydrochloric acid, nitric acid, acetic acid, trifluoromethanesulfonic acid, methanesulfonic acid, phosphoric acid, citric acid, or the like is preferably used. The temperature and concentration of the acidic aqueous solution are appropriately determined. From the viewpoint of productivity, it is preferable to use an aqueous solution of 3 mass% or more and 30 mass% or less sulfuric acid at a temperature of 0°C or more and 80°C or less.

The thickness of a polymer electrolyte membrane according to the present invention is more preferably 1 µm or more to obtain the mechanical strength and physical durability of a membrane suitable for practical use, and is preferably 2,000 µm or less to decrease the resistance of the membrane, that is, to enhance the power generation performance. The still more preferable range of the thickness of the membrane is 3 µm or more and 200 µm or less. The thickness of the membrane can be controlled on the basis of the concentration of the solution or the thickness of the coating on the base plate.

In addition, a polymer electrolyte membrane in the present invention may contain an additive to be used for an ordinary polymer compound, such as a crystallization nucleating agent, plasticizer, stabilizer, antioxidant, or mold release agent to the extent that is not contrary to an object of the present invention.

In addition, for the purpose of enhancing the mechanical strength, thermal stability, processability, and the like, a polymer electrolyte membrane composed of a block copolymer obtained by the present invention may contain various kinds of polymer, elastomer, filler, microparticle, additive, and/or the like to the extent that does not adversely affect the various characteristics mentioned earlier. In addition, the polymer electrolyte membrane may be reinforced with a microporous membrane, nonwoven fabric, mesh, or the like.

A block copolymer according to the present invention is used as a polymer electrolyte material to be made into a molded polymer electrolyte product or a polymer electrolyte membrane, and thus, can be used in various applications. For example, the polymer electrolyte material can be used for medical uses such as artificial skin, filtration uses, ion-exchange resin uses such as chlorine-resistant reverse osmosis membranes, various structural material uses, electrochemical uses, humidifying membranes, antifogging membranes, antistatic membranes, deoxidation membranes, solar battery membranes, and gas barrier membranes. Above all, the polymer electrolyte material can be more preferably used in various electrochemical uses. Examples of the electrochemical uses include polymer electrolyte fuel cells, redox-flow batteries, water electrolysis apparatuses, chlor-alkali electrolysis apparatuses, electrochemical hydrogen pumps, and water electrolysis hydrogen generators.

In the polymer electrolyte fuel cell, electrochemical hydrogen pump, or water electrolysis hydrogen generator, the polymer electrolyte membrane is used in the form of a structure having a catalyst layer, an electrode substrate, and a separator sequentially stacked on both sides of the polymer electrolyte membrane. Among these, an electrolyte membrane on each of both sides of which a catalyst layer is stacked (that is, a laminate having a layer structure of catalyst layer/electrolyte membrane/catalyst layer) is referred to as a catalyst coated membrane (CCM). Furthermore, a laminate including a catalyst layer and a gas diffusion substrate sequentially stacked on each of both sides of the electrolyte membrane (that is, a laminate having a layer structure of gas diffusion substrate/catalyst layer/electrolyte membrane/catalyst layer/gas diffusion substrate) is referred to as a membrane electrode assembly (MEA). A block copolymer according to the present invention is particularly suitably used as a polymer electrolyte membrane that constitutes such a CCM or MEA.

A catalyst coated membrane according to the present invention is characterized by being constituted using the polymer electrolyte membrane produced using a polymer electrolyte material containing the above-described block copolymer.

A membrane electrode assembly according to the present invention is characterized by being constituted using the polymer electrolyte membrane produced using a polymer electrolyte material containing the above-described block copolymer.

A polymer electrolyte fuel cell according to the present invention is characterized by being constituted using the polymer electrolyte membrane produced using a polymer electrolyte material containing the above-described block copolymer.

A water electrolysis hydrogen generator according to the present invention is characterized by being constituted using the polymer electrolyte membrane produced using a polymer electrolyte material containing the above-described block copolymer.

### Examples

### (1) Molecular Weight of Polymer

The number-average molecular weight and weight-average molecular weight of a polymer were measured by GPC. Using HLC-8022GPC manufactured by Tosoh Corporation as an integrated device of an ultraviolet absorption detector and a differential refractive index detector, using a TSKgel Guard Column SuperH-H column (having an inner diameter of 4.6 mm and a length of 3.5 cm) manufactured by Tosoh Corporation as a guard column, and using two TSKgel SuperHM-H columns (having an inner diameter of 6.0 mm and a length of 15 cm) manufactured by Tosoh Corporation as GPC columns, the measurement was performed with an *N-*methyl-2-pyrrolidone solvent (*N*-methyl-2-pyrrolidone solvent containing 10 mmol/L lithium bromide) at a sample concentration of 0.1 wt%, at a flow rate of 0.2 mL/min, at a temperature of 40°C, and at a measuring wavelength of 265 nm, and the number-average molecular weight and the weight-average molecular weight were determined in terms of standard polystyrene.

### (2) Ion Exchange Capacity (IEC)

The ion exchange capacity was measured by the neutralization titration method described in 1] to 4] below. The measurement was performed three times, and the average of the three measurements was adopted.
1] A block copolymer was subjected to proton exchange, and thoroughly washed with pure water, and water was wiped off. Then, the block copolymer was vacuum-dried at 100°C for 12 hours or more, and the dry weight of the membrane was obtained.
2] To the block copolymer, 50 mL of an aqueous 5 wt% sodium sulfate solution was added, and the resulting mixture was left to stand for 12 hours to undergo ion exchange.
3] The sulfuric acid generated was titrated using an aqueous 0.01 mol/L sodium hydroxide solution. A commercially available 0.1 w/v% phenolphthalein solution for titration was added as an indicator, and the point at which the solution turned pale red-purple was taken as the end point.
4] The IEC was determined in accordance with the following formula. IEC (meq/g) = [concentration (mmol/mL) of aqueous sodium hydroxide solution × dropping amount (mL) of aqueous sodium hydroxide solution] / dry weight (g) of sample

### (3) Rate of Dry-wet Dimensional Change

The electrolyte membrane (analyte) was cut to a 3 mm × 20 mm rectangle, which was used as a sample piece. The sample piece was placed in the sample holder of a thermomechanical analyzer TMA/SS6100 (manufactured by Hitachi High-Tech Science Corporation) having an oven with a temperature and humidity regulating function, in such a manner that the long side of the sample piece was in the direction of measurement. The analyzer was set in such a manner that a stress of 20 mN was applied. In the oven, the sample was made steady at 23°C and at 50% RH for 1 hour, and the length of this sample piece was regarded as the zero point. The temperature in the oven was fixed at 23°C, the humidity was adjusted to 30% RH (a dry condition) over a period of 30 minutes, and the sample piece was held for 20 minutes. Next, the humidity was adjusted to 90% RH (a humidified condition) over a period of 30 minutes. This dry-wet cycle (30% RH-90% RH) was regarded as one cycle, and a difference at the 10th cycle between the rate (%) of dimensional change under the 30% RH and the rate (%) of dimensional change under the 90% RH was regarded as the rate (%) of dry-wet dimensional change.

### (4) Observation of Phase-separation Structure by Transmission Electron Microscope (TEM)

A sample piece was immersed in an aqueous 2 wt% lead acetate solution as a staining agent, and left to stand at 25°C for 72 hours. The sample stained was taken out, and embedded in an epoxy resin. An 80 nm thin piece was cut out using an ultramicrotome at room temperature, and the thin piece obtained was collected on a Cu grid to be used for TEM observation. The observation was performed at an accelerating voltage of 100 kV, and a photograph was taken at a photographic magnification of ×20,000 and ×40,000. The device used was HT7700 (manufactured by Hitachi High-Technologies Corporation).

### (5) Observation of Phase-separation Structure by Transmission Electron Microscopic (TEM) Tomography

A thin piece sample made by the method described in (4) above was mounted on a collodion membrane, and observed under the following conditions.

Device: field emission electron microscope (HRTEM) JEM 2100F manufactured by JEOL Ltd.
Image-capturing: DigitalMicrograph (manufactured by Gatan, Inc.)
System: a marker method
Accelerating voltage: 200 kV
Photographic magnification: 30,000 times
Angle of tilt: +60° to -62°
Reconstruction resolution: 0.71 nm/pixel

The marker method was applied to the three-dimensional reconstruction processing. An alignment marker used for performing three-dimensional reconstruction was Au colloidal particles provided on a collodion membrane. Using the marker as a reference, the sample was tilted in 1° steps in the range of from +61° to -62°, and TEM images were taken. On the basis of a total of 124 TEM images obtained from the continuous tilt image series, a CT reconstruction processing was performed, and a three-dimensional phase-separation structure was observed.

### (6) Evaluation of Power Generation Performance

To evaluate power generation performance, a catalyst coated membrane (CCM) and a membrane electrode assembly (MEA) were produced in accordance with the following procedure.

### <Production of CCM>

The below-described anode catalyst decal and cathode catalyst decal were superposed on one face of an electrolyte membrane and the other face respectively, and hot-pressed at 150°C at 5 MPa for 3 minutes to be joined. Then, a polytetrafluoroethylene film was peeled off from each of the catalyst decals to obtain a CCM.

### <Production of Anode Catalyst Decal>

Ten parts by mass of platinum-catalyst-supported carbon particles TEC10E50E (the platinum supporting ratio, 50 mass%) manufactured by TANAKA KIKINZOKU KOGYO K. K. and 5 parts by mass of a fluorine polymer electrolyte ("Nafion" (registered trademark) manufactured by The Chemours Company), in terms of a solid content, were dispersed in a solvent mixture (water and 1-propyl alcohol at a ratio of 4:6 by mass), using a bead mill, to prepare a catalyst ink 1 having a solid concentration of 10 mass%. This catalyst ink 1 was applied to a commercially available polytetrafluoroethylene film, and dried to produce an anode catalyst decal. The amount of platinum of the catalyst layer was 0.4 mg/cm².

### <Production of Cathode Catalyst Decal>

A cathode catalyst decal was produced in the same manner as the anode catalyst decal except that the amount of platinum of the catalyst layer was changed to 0.7 mg/cm².

### <Production of MEA>

A commercially available gas diffusion layer 24BCH manufactured by SGL Carbon Japan Ltd. was superposed on both faces of the CCM produced as described above, and hot-pressed at 160°C at 4.5 Ma for 5 minutes to produce an MEA. Using this MEA, the power generation performance was evaluated in accordance with the below-described procedure.

### <Evaluation of Power Generation Performance>

The MEA was set in a JARI standard cell "Ex-1" (the electrode area, 25 cm²) manufactured by EIWA CORPORATION, and used as a module for evaluating power generation. Hydrogen gas as fuel gas was supplied to the anode electrode, and air as oxidizing gas was supplied to the cathode electrode. The power generation was evaluated under the below-described conditions, and the electric current was swept from 0 A/cm² to 1.2 A/cm² until the voltage became 0.2 V or less.

In the present invention, the voltage was read when the current density was 1.2 A/cm². Then, the reading was evaluated.

Electronic load device: an electronic load device "PLZ664WA" manufactured by Kikusui Electronics Corp.
Cell temperature: 60°C
Relative humidity of supply gases (hydrogen gas and air): 40% RH (under low-humidity conditions), 80% RH (under high-humidity conditions)
Back pressure of supply gases (hydrogen gas and air): 150 kPa
Ratio of utilization of gas: the anode, 70% of the stoichiometric amount; the cathode, 40% of the stoichiometric amount

### Synthesis Example 1 (Synthesis of 2,2-bis(4-hydroxyphenyl)-1,3-dioxolane (K-DHBP) represented by the following formula (G1))

In a 500 mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g of *p*-toluenesulfonic acid monohydrate were fed to obtain a solution. Then, the solution was stirred for 2 hours at a temperature kept at 78 to 82°C. Further, the internal temperature was gradually raised to 120°C, and kept at 120°C until the distillation of methyl formate, methanol, and trimethyl orthoformate completely stopped. After the reaction liquid was cooled to room temperature, the reaction liquid was diluted with ethyl acetate. The organic layer was washed with 100 mL of an aqueous 5% potassium carbonate solution, the resulting liquid was then separated, and the solvent was distilled away. To the residue, 80 mL of dichloromethane was added to deposit crystals, and the crystals were filtrated and dried to give 52.0 g of 2,2-bis(4-hydroxyphenyl)-1,3-dioxolane. The compound had a purity of 99.9%.

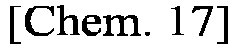

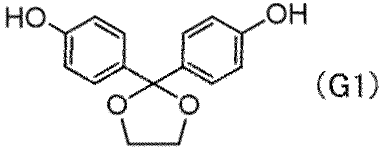

### Synthesis Example 2 (Synthesis of disodium-3,3'-disulfonate-4,4'-difluorobenzophenone represented by the following formula (G2))

In 150 mL of fuming sulfuric acid (50% SO₃) (a Wako Pure Chemical reagent), 109.1 g of 4,4'-difluorobenzophenone (an Aldrich reagent) was allowed to react at 100°C for 10 hours. Then, the resulting product was gradually poured into a large amount of water, the resulting mixture was neutralized with NaOH, and then 200 g of sodium chloride (NaCl) was added to the mixture to precipitate a synthesized product. The precipitate obtained was filtrated off and recrystallized from an aqueous ethanol solution to give disodium-3,3'-disulfonate-4,4'-difluorobenzophenone. The compound had a purity of 99.3%.

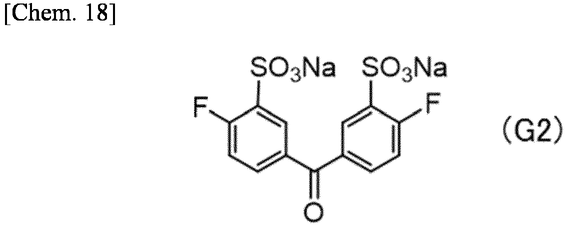

### Synthesis Example 3 (Synthesis of disodium diphenylsulfone-4,4'-difluoro-3,3'-disulfonate represented by the following formula (G3))

In 150 mL of fuming sulfuric acid (50% SO₃) (a Wako Pure Chemical reagent), 109.1 g of 4,4-difluorodiphenyl sulfone (an Aldrich reagent) was allowed to react at 100°C for 10 hours. Then, the resulting product was gradually poured into a large amount of water, the resulting mixture was neutralized with NaOH, and then 200 g of sodium chloride was added to the mixture to precipitate a synthesized product. The precipitate obtained was filtrated off and recrystallized from an aqueous ethanol solution to give disodium diphenylsulfone-4,4'-difluoro-3,3'-disulfonate. The compound had a purity of 99.3%.

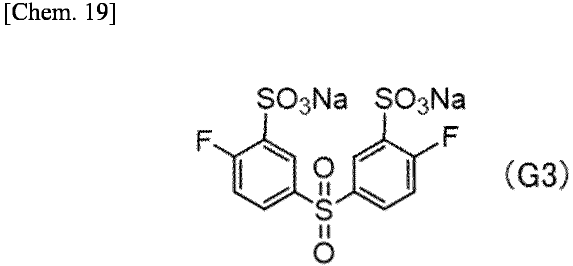

### Example 1

### (Synthesis of nonionic oligomer a1 represented by the following general formula (G4))

Into a 2,000 mL SUS polymerizer equipped with a stirrer, a nitrogen introduction tube, and a Dean-Stark trap, 16.59 g of potassium carbonate (an Aldrich reagent, 120 mmol), 25.83 g (100 mmol) of K-DHBP obtained in Synthesis Example 1, and 20.73 g of 4,4'-difluorobenzophenone (an Aldrich reagent, 95 mmol) were introduced. After the device was purged with nitrogen, 300 mL of *N-*methylpyrrolidone (NMP) and 100 mL of toluene were added, the resulting mixture was dehydrated at 150°C, the temperature was raised to remove toluene, and the mixture was polymerized at 170°C for 3 hours. The resulting product was purified by reprecipitation in a large amount of methanol to obtain a nonionic oligomer a1 having a hydroxy end. The number-average molecular weight of this nonionic oligomer a1 having a hydroxy end was 9,000.

Into a 500 mL three-necked flask equipped with a stirrer, a nitrogen introduction tube, and a Dean-Stark trap, 1.1 g of potassium carbonate (an Aldrich reagent, 8 mmol) and 9.0 g (1 mmol) of the nonionic oligomer a1 having a hydroxy end were introduced. After the device was purged with nitrogen, 100 mL of NMP and 30 mL of toluene were added, the resulting mixture was dehydrated at 100°C, and the temperature was raised to remove toluene. Furthermore, 1.1 g of hexafluorobenzene (an Aldrich reagent, 6 mmol) was introduced, and the resulting mixture was allowed to react at 105°C for 12 hours. The resulting product was purified by reprecipitation in a large amount of isopropyl alcohol to obtain a nonionic oligomer a1 (having a fluoro end group) represented by the following formula (G4). The number-average molecular weight of this nonionic oligomer a1 was 10,000.

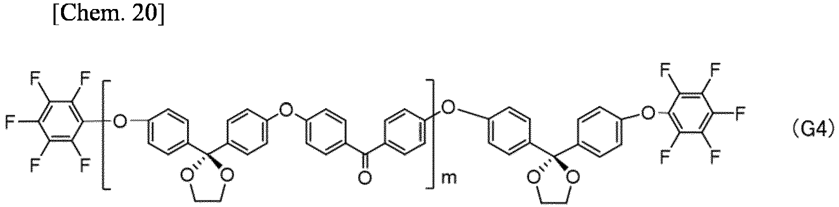

### (Synthesis of ionic oligomer a2 represented by the following formula (G5))

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4'-biphenol (an Aldrich reagent, 50 mmol), 41.60 g (98.5 mmol) of disodium-3,3'-disulfonate-4,4'-difluorobenzophenone obtained in Synthesis Example 2, and 26.40 g of 18-crown-6 (Wako Pure Chemical Industries, Ltd., 100 mmol) were introduced. After the device was purged with nitrogen, 300 mL of NMP and 100 mL of toluene were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a2 (having a hydroxy end group) represented by the following formula (G5). The number-average molecular weight of this ionic oligomer a2 was 45,000. In this regard, in the formula (G5), M represents a hydrogen atom, Na, or K.

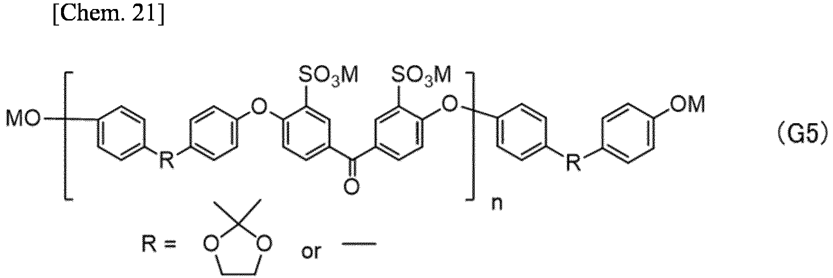

### (Synthesis of block copolymer b1 containing oligomer a2 as ionic segment and oligomer a1 as nonionic segment)

In a 2,000 mL SUS polymerizer equipped with a stirrer, a nitrogen introduction tube, and a Dean-Stark trap, 49.0 g of the ionic oligomer a2 and 12.3 g of the nonionic oligomer a1 were introduced, NMP was added in such a manner that the total amount of the oligomers fed was 7 wt%, and the resulting mixture was allowed to react at 105°C for 24 hours. The resulting product was reprecipitated in a large amount of an isopropyl alcohol/NMP solution mixture (at a ratio of 2/1 by weight), and purified in a large amount of isopropyl alcohol to obtain a block copolymer b1. This block copolymer b1 had a number-average molecular weight of 160,000 and a weight-average molecular weight of 400,000.

A 20 wt% NMP solution in which the resulting block copolymer b1 was dissolved was filtrated under pressure using a glass fiber filter, then applied to a glass base plate by cast coating, and dried at 100°C for 4 hours to obtain a molded membrane product. This molded product was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a polymer electrolyte membrane A (having a thickness of 10 µm). Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 14.8 J/g. In addition, no crystal peak was exhibited (the crystallinity was 0%) in wide-angle X-ray diffraction. The results are shown in Table 1.

### Example 2

### (Synthesis of block copolymer b2 containing oligomer a2 as ionic segment and oligomer a1 as nonionic segment)

A block copolymer b2 was obtained in the same manner as the block copolymer b1 was synthesized except that the reaction time for the ionic oligomer a2 and the nonionic oligomer a1 was changed to 32 hours. This block copolymer b2 had a number-average molecular weight of 190,000 and a weight-average molecular weight of 440,000.

A polymer electrolyte membrane B (having a thickness of 10 µm) was obtained by the same method as in Example 1 except that the block copolymer b2 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.6 J/g. In addition, no crystal peak was exhibited (the crystallinity was 0%) in wide-angle X-ray diffraction. The results are shown in Table 1.

### Example 3

### (Synthesis of block copolymer b3 containing oligomer a2 as ionic segment and oligomer a1 as nonionic segment)

A block copolymer b3 was obtained in the same manner as the block copolymer b1 was synthesized except that the reaction time for the ionic oligomer a2 and the nonionic oligomer a1 was changed to 16 hours. This block copolymer b3 had a number-average molecular weight of 120,000 and a weight-average molecular weight of 340,000.

A polymer electrolyte membrane C (having a thickness of 10 µm) was obtained by the same method as in Example 1 except that the block copolymer b3 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 13.3 J/g. In addition, no crystal peak was exhibited (the crystallinity was 0%) in wide-angle X-ray diffraction. The results are shown in Table 1.

### Example 4

### (Synthesis of nonionic oligomer a3 represented by formula (G4))

An oligomer a3 having a hydroxy end was obtained in the same manner as the oligomer a1 having a hydroxy end was synthesized except that the amount of 4,4'-difluorobenzophenone used was 20.51 g. The number-average molecular weight of this oligomer a3 having a hydroxy end was 7,000.

A nonionic oligomer a3 (having a fluoro end group) represented by the formula (G4) was obtained in the same manner as the oligomer a1 was synthesized except that 7.0 g of the oligomer a3 having a hydroxy end was used in place of the oligomer a1 having a hydroxy end. The number-average molecular weight of this nonionic oligomer a3 was 8,000.

### (Synthesis of block copolymer b4 containing oligomer a2 as ionic segment and oligomer a3 as nonionic segment)

A block copolymer b4 was obtained in the same manner as the block copolymer b1 was synthesized except that the nonionic oligomer a3 (7.65 g) was used in place of the nonionic oligomer a1 (12.3 g). This block copolymer b4 had a number-average molecular weight of 160,000 and a weight-average molecular weight of 400,000.

A polymer electrolyte membrane D (having a thickness of 10 µm) was obtained by the same method as in Example 1 except that the block copolymer b4 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 6.7 J/g. In addition, no crystal peak was exhibited (the crystallinity was 0%) in wide-angle X-ray diffraction. The results are shown in Table 1.

### Example 5

### (Synthesis of nonionic oligomer a4 represented by formula (G4))

An oligomer a4 having a hydroxy end was obtained in the same manner as the oligomer a1 having a hydroxy end was synthesized except that the amount of 4,4'-difluorobenzophenone used was 20.99 g. The number-average molecular weight of this oligomer a4 having a hydroxy end was 11,000.

A nonionic oligomer a4 (having a fluoro end group) represented by the formula (G4) was obtained in the same manner as the oligomer a1 was synthesized except that 11.0 g of the oligomer a4 having a hydroxy end was used in place of the oligomer a1 having a hydroxy end. The number-average molecular weight of this nonionic oligomer a3 was 12,000.

### (Synthesis of ionic oligomer a5 represented by formula (G5))

An ionic oligomer a5 was obtained in the same manner as the ionic oligomer a2 was synthesized except that the amount of disodium-3,3'-disulfonate-4,4'-difluorobenzophenone used was 41.72 g (98.8 mmol). The number-average molecular weight of this ionic oligomer a5 was 48,000.

### (Synthesis of block copolymer b5 containing oligomer a5 as ionic segment and oligomer a4 as nonionic segment)

A block copolymer b5 was obtained in the same manner as the block copolymer b1 was synthesized except that the nonionic oligomer a4 (12.3 g) was used in place of the nonionic oligomer a1 (12.3 g). This block copolymer b5 had a number-average molecular weight of 160,000 and a weight-average molecular weight of 400,000.

A polymer electrolyte membrane E (having a thickness of 10 µm) was obtained by the same method as in Example 1 except that the block copolymer b5 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.8 J/g. In addition, no crystal peak was exhibited (the crystallinity was 0%) in wide-angle X-ray diffraction. The results are shown in Table 1.

### Example 6

### (Synthesis of block copolymer b6 containing oligomer a5 as ionic segment and oligomer a1 as nonionic segment)

A block copolymer b6 was obtained in the same manner as the block copolymer b1 was synthesized except that the ionic oligomer a5 (49.0 g) was used in place of the ionic oligomer a2 (49.0 g), and that the nonionic oligomer a1 (7.65 g) was used in place of the nonionic oligomer a1 (12.3 g). This block copolymer b6 had a number-average molecular weight of 160,000 and a weight-average molecular weight of 400,000.

A polymer electrolyte membrane F (having a thickness of 10 µm) was obtained by the same method as in Example 1 except that the block copolymer b6 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 7.2 J/g. In addition, no crystal peak was exhibited (the crystallinity was 0%) in wide-angle X-ray diffraction. The results are shown in Table 1.

### Example 7

### (Synthesis of ionic oligomer a6 represented by formula (G5))

An ionic oligomer a6 was obtained in the same manner as the ionic oligomer a2 was synthesized except that the amount of disodium-3,3'-disulfonate-4,4'-difluorobenzophenone used was 41.50 g (98.3 mmol). The number-average molecular weight of this ionic oligomer a6 was 43,000.

### (Synthesis of block copolymer b7 containing oligomer a6 as ionic segment and oligomer a3 as nonionic segment)

A block copolymer b7 was obtained in the same manner as the block copolymer b1 was synthesized except that the ionic oligomer a6 (49.0 g) was used in place of the ionic oligomer a2 (49.0 g), and that the nonionic oligomer a3 (12.3 g) was used in place of the nonionic oligomer a1 (12.3 g). This block copolymer b7 had a number-average molecular weight of 160,000 and a weight-average molecular weight of 400,000.

A polymer electrolyte membrane G (having a thickness of 10 µm) was obtained by the same method as in Example 1 except that the block copolymer b7 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 12.9 J/g. In addition, no crystal peak was exhibited (the crystallinity was 0%) in wide-angle X-ray diffraction. The results are shown in Table 1.

### Example 8

### (Synthesis of nonionic oligomer a7 represented by the following formula (G6))

A nonionic oligomer a10 having a hydroxy end was obtained in the same manner as the nonionic oligomer a1 having a hydroxy end was synthesized except that 23.21 g of 4,4-difluorodiphenyl sulfone was used in place of 4,4'-difluorobenzophenone. The number-average molecular weight of this nonionic oligomer a10 having a hydroxy end was 7,000.

A nonionic oligomer a7 (having a fluoro end group) represented by the formula (G6) was obtained in the same manner as the nonionic oligomer a1 was synthesized except that the nonionic oligomer a7 having a hydroxy end (7.0 g) was used in place of the nonionic oligomer a1 having a hydroxy end. The number-average molecular weight of this nonionic oligomer a7 was 8,000.

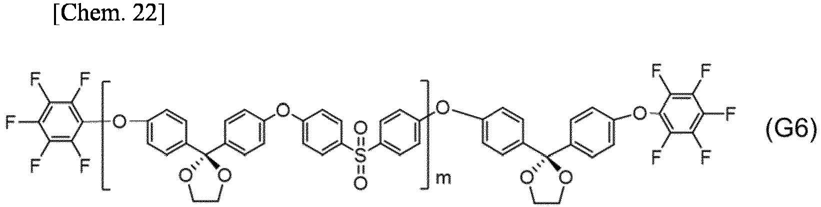

### (Synthesis of ionic oligomer a8 represented by the following formula (G7))

Into a 2,000 mL SUS polymerizer equipped with a stirrer, a nitrogen introduction tube, and a Dean-Stark trap, 27.6 g of potassium carbonate (an Aldrich reagent, 200 mmol), 12.9 g (50 mmol) of K-DHBP obtained in the above-described Synthesis Example 1, 9.3 g of 4,4'-biphenol (an Aldrich reagent, 50 mmol), and 44.66 g (98.1 mmol) of disodium diphenylsulfone-4,4'-difluoro-3,3'-disulfonate obtained in Synthesis Example 3 were introduced. After the device was purged with nitrogen, 300 mL of NMP and 100 mL of toluene were added, the resulting mixture was dehydrated at 130°C, the temperature was raised to remove toluene, and the mixture was polymerized at 165°C for 5 hours. The resulting product was purified by reprecipitation in a large amount of isopropyl alcohol to obtain an ionic oligomer a8 (having a hydroxy end group) represented by the formula (G10). The number-average molecular weight of this ionic oligomer a8 was 42,000.

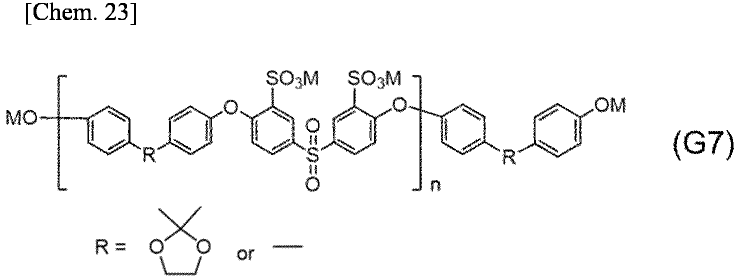

### (Synthesis of block copolymer b8 containing oligomer a8 as ionic segment and oligomer a7 as nonionic segment)

A block copolymer b8 was obtained in the same manner as the block copolymer b1 was synthesized except that the ionic oligomer a8 (49.0 g) was used in place of the ionic oligomer a2 (49.0 g), and that the nonionic oligomer a7 (12.3 g) was used in place of the nonionic oligomer a1 (12.3 g). This block copolymer b8 had a number-average molecular weight of 160,000 and a weight-average molecular weight of 410,000.

A polymer electrolyte membrane H (having a thickness of 10 µm) was obtained by the same method as in Example 1 except that the block copolymer b8 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC. In addition, no crystal peak was exhibited (the crystallinity was 0%) in wide-angle X-ray diffraction. The results are shown in Table 1.

### Comparative Example 1

### (Synthesis of ionic oligomer a9 represented by formula (G5))

An ionic oligomer a9 was obtained in the same manner as the ionic oligomer a2 was synthesized except that the amount of disodium-3,3'-disulfonate-4,4'-difluorobenzophenone used was 41.38 g (98.0 mmol). The number-average molecular weight of this ionic oligomer a9 was 38,000.

### (Synthesis of block copolymer b9 containing oligomer a9 as ionic segment and oligomer a1 as nonionic segment)

A block copolymer b9 was obtained in the same manner as the block copolymer b1 was synthesized except that the ionic oligomer a9 (49.0 g) was used in place of the ionic oligomer a2 (49.0 g). This block copolymer b9 had a number-average molecular weight of 160,000 and a weight-average molecular weight of 400,000.

A polymer electrolyte membrane I (having a thickness of 10 µm) was obtained by the same method as in Example 1 except that the block copolymer b9 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.1 J/g. In addition, no crystal peak was exhibited (the crystallinity was 0%) in wide-angle X-ray diffraction. The results are shown in Table 1.

### Comparative Example 2

### (Synthesis of block copolymer b10 containing oligomer a9 as ionic segment and oligomer a3 as nonionic segment)

A block copolymer b10 was obtained in the same manner as the block copolymer b1 was synthesized except that the ionic oligomer a9 (49.0 g) was used in place of the ionic oligomer a2 (49.0 g), and that the nonionic oligomer a3 (7.65 g) was used in place of the nonionic oligomer a1 (12.3 g). This block copolymer b10 had a number-average molecular weight of 160,000 and a weight-average molecular weight of 420,000.

A polymer electrolyte membrane J (having a thickness of 10 µm) was obtained by the same method as in Example 1 except that the block copolymer b10 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 7.0 J/g. In addition, no crystal peak was exhibited (the crystallinity was 0%) in wide-angle X-ray diffraction. The results are shown in Table 1.

### Comparative Example 3

### (Synthesis of ionic oligomer a10 represented by formula (G5))

An ionic oligomer a10 was obtained in the same manner as the ionic oligomer a2 was synthesized except that the amount of disodium-3,3'-disulfonate-4,4'-difluorobenzophenone used was 41.34 g (97.9 mmol). The number-average molecular weight of this ionic oligomer a10 was 35,000.

### (Synthesis of block copolymer b11 containing oligomer a10 as ionic segment and oligomer a3 as nonionic segment)

A block copolymer b11 was obtained in the same manner as the block copolymer b1 was synthesized except that the ionic oligomer a10 (49.0 g) was used in place of the ionic oligomer a2 (49.0 g), and that the nonionic oligomer a3 (12.3 g) was used in place of the nonionic oligomer a1 (12.3 g). This block copolymer b11 had a number-average molecular weight of 160,000 and a weight-average molecular weight of 400,000.

A polymer electrolyte membrane K (having a thickness of 10 µm) was obtained by the same method as in Example 1 except that the block copolymer b11 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 13.1 J/g. In addition, no crystal peak was exhibited (the crystallinity was 0%) in wide-angle X-ray diffraction. The results are shown in Table 1.

### Comparative Example 4

### (Synthesis of block copolymer b12 containing oligomer a2 as ionic segment and oligomer a1 as nonionic segment)

In a 2,000 mL SUS polymerizer equipped with a stirrer, a nitrogen introduction tube, and a Dean-Stark trap, 49.0 g of the ionic oligomer a2 and 12.3 g of the nonionic oligomer a1 were introduced, NMP was added in such a manner that the total amount of the oligomers fed was 5 wt%, and the resulting mixture was allowed to react at 95°C for 14 hours. The resulting product was reprecipitated in a large amount of an isopropyl alcohol/NMP solution mixture (at a ratio of 2/1 by weight), and purified in a large amount of isopropyl alcohol to obtain a block copolymer b1. This block copolymer b12 had a number-average molecular weight of 70,000 and a weight-average molecular weight of 220,000.

A polymer electrolyte membrane L (having a thickness of 10 µm) was obtained by the same method as in Example 1 except that the block copolymer b12 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous and ununiform structure was partially found. A crystallization peak was exhibited in DSC, and the heat of crystallization was 10.3 J/g. In addition, no crystal peak was exhibited (the crystallinity was 0%) in wide-angle X-ray diffraction. The results are shown in Table 1.

**[Table 1]**

| | Block Copolymer | | | | | | Polymer Electrolyte Membrane | Properties | | Power Generation Performance | |
|---|---|---|---|---|---|---|---|---|---|---|---|
| | Type | Ionic Segment Mn1 | Nonionic Segment Mn2 | Block Copolymer Mn3 | Mn3/ (Mn1+Mn2) | Mn1/Mn2 | Type | IEC (meq/g) | Rate of Dry-Wet Dimensional Change (%) | High-Humidity Power Generation Performance (V) | Low-Humidity Power Generation Performance (V) |
| Example 1 | b1 | 45,000 | 10,000 | 160,000 | 2.91 | 4.50 | A | 2.1 | 4.5 | 0.65 | 0.52 |
| Example 2 | b2 | 45,000 | 10,000 | 190,000 | 3.45 | 4.50 | B | 2.1 | 4.3 | 0.66 | 0.53 |
| Example 3 | b3 | 45,000 | 10,000 | 120,000 | 2.18 | 4.50 | C | 2.1 | 4.7 | 0.63 | 0.51 |
| Example 4 | b4 | 45,000 | 8,000 | 160,000 | 3.02 | 5.63 | D | 2.4 | 5.8 | 0.68 | 0.55 |
| Example 5 | b5 | 48,000 | 12,000 | 160,000 | 2.67 | 4.00 | E | 2.1 | 4.2 | 0.67 | 0.54 |
| Example 6 | b6 | 48,000 | 10,000 | 160,000 | 2.76 | 4.80 | F | 2.4 | 5.6 | 0.69 | 0.57 |
| Example 7 | b7 | 43,000 | 8,000 | 160,000 | 3.13 | 5.38 | G | 2.1 | 4.9 | 0.62 | 0.50 |
| Example 8 | b8 | 43,000 | 8,000 | 160,000 | 3.13 | 5.38 | H | 2.1 | 6.0 | 0.61 | 0.49 |
| Comparative Example 1 | b9 | 38,000 | 10,000 | 160,000 | 3.33 | 3.80 | I | 2.1 | 4.4 | 0.56 | 0.43 |
| Comparative Example 2 | b10 | 38,000 | 8,000 | 160,000 | 3.48 | 4.75 | J | 2.4 | 5.9 | 0.57 | 0.46 |
| Comparative Example 3 | b11 | 35,000 | 8,000 | 160,000 | 3.72 | 4.38 | K | 2.1 | 5.0 | 0.53 | 0.44 |
| Comparative Example 4 | b12 | 45,000 | 10,000 | 70,000 | 1.27 | 4.50 | L | 2.1 | 6.2 | 0.58 | 0.49 |

### Industrial Applicability

A block copolymer according to the present invention is used as a polymer electrolyte material to be made into a molded polymer electrolyte product or a polymer electrolyte membrane, and thus, can be used in various applications. For example, the polymer electrolyte material can be used for medical uses such as artificial skin, filtration uses, ion-exchange resin uses such as chlorine-resistant reverse osmosis membranes, various structural material uses, electrochemical uses, humidifying membranes, antifogging membranes, antistatic membranes, deoxidation membranes, solar battery membranes, and gas barrier membranes. Above all, the molded electrolyte membrane can be more preferably used in various electrochemical uses. Examples of the electrochemical uses include polymer electrolyte fuel cells, redox-flow batteries, water electrolysis apparatuses, chlor-alkali electrolysis apparatuses, electrochemical hydrogen pumps, and water electrolysis hydrogen generators. A block copolymer according to the present invention is particularly suitably used as a polymer electrolyte membrane constituting a CCM or an MEA, for a polymer electrolyte fuel cell and a water electrolysis hydrogen generator.

## Claims

1. A block copolymer comprising one or more segments containing an ionic group (hereinafter referred to as an "ionic segment(s)") and one or more segments containing no ionic group (hereinafter referred to as a "nonionic segment(s)"),
wherein said ionic segment has an aromatic hydrocarbon polymer having a number-average molecular weight of more than 40,000 and 50,000 or less, and
wherein said block copolymer satisfies the relation of: Mn3 / (Mn1 + Mn2) > 1.5,
wherein Mn1 represents the number-average molecular weight of said ionic segment, Mn2 represents the number-average molecular weight of said nonionic segment, and Mn3 represents the number-average molecular weight of said block copolymer.

2. The block copolymer according to claim 1, wherein the heat of crystallization of said block copolymer is 0.1 J/g or more as measured by differential scanning calorimetry, or wherein the crystallinity of said block copolymer is 0.5% or more as measured by wide-angle X-ray diffraction.

3. The block copolymer according to claim 1 or 2, wherein said aromatic hydrocarbon polymer is an aromatic polyether polymer.

4. The block copolymer according to claim 3, wherein said aromatic polyether polymer is an aromatic polyether ketone polymer.

5. The block copolymer according to any one of claim 1 or 2, wherein said block copolymer comprises a linker site that links said ionic segment with said nonionic segment.

6. The block copolymer according to any one of claim 1 or 2, which satisfies the relation of: 2 < Mn1 / Mn2 < 7.

7. The block copolymer according to any one of claim 1, wherein said ionic segment comprises a structure represented by the following general formula (S1):
[Chem. 1]
*-Ar¹-y¹-Ar²-Q-Ar³-y²-Ar⁴-Q-* (S1)
(wherein, in the general formula (S1), Ar¹ to Ar⁴ independently represent a substituted or unsubstituted arylene group, and at least one of Ar¹ to Ar⁴ has an ionic group; Y¹ and Y² independently represent a ketone group or a protective group that may be induced to a ketone group; and the symbol * represents a bond with the general formula (S1) or with another constituent unit.)

8. The block copolymer according to claim 7, wherein said structure represented by the general formula (S1) is a structure represented by the following general formula (S2): 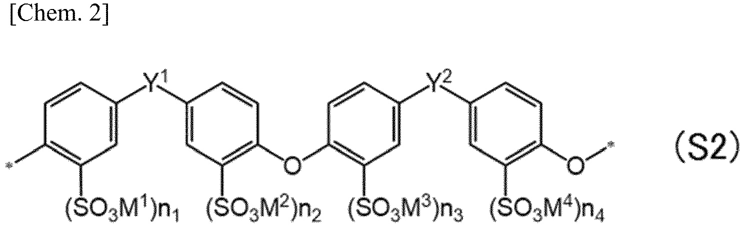 (wherein, in the general formula (S2), Y¹ and Y² independently represent a ketone group or a protective group that may be induced to a ketone group; M¹ to M⁴ independently represent a hydrogen atom, metal cation, or ammonium cation; n₁ to n₄ are independently 0 or 1, and at least one of n₁ to n₄ is 1; and the symbol * represents a bond with the general formula (S2) or with another constituent unit.)

9. The block copolymer according to any one of claim 1 or 2, wherein said nonionic segment comprises an aromatic polyether polymer.

10. The block copolymer according to claim 9, wherein said aromatic polyether polymer is an aromatic polyether ketone polymer.

11. The block copolymer according to any one of claim 1, wherein said nonionic segment comprises a structure represented by the following general formula (S3):
[Chem. 3]
*-Ar⁵-Y³-Ar⁶-O-Ar⁷-Y⁴-Ar⁸-O-* (S3)
(wherein, in the general formula (S3), Ar⁵ to Ar⁸ independently represent an arylene group with the proviso that none of Ar⁵ to Ar⁸ has an ionic group; Y³ and Y⁴ independently represent a ketone group or a protective group that may be induced to a ketone group; and the symbol * represents a bond with the general formula (S3) or with another constituent unit.)

12. The block polymer according to claim 11, wherein said structure represented by the general formula (S3) is a structure represented by the following general formula (S4): 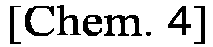 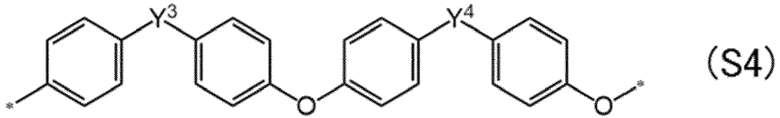 (wherein, in the general formula (S4), Y³ and Y⁴ independently represent a ketone group or a protective group that may be induced to a ketone group; and the symbol * represents a bond with the general formula (S4) or with another constituent unit.)

13. The block copolymer according to any one of claim 1, comprising a co-continuous phase-separation structure.

14. A polymer electrolyte material comprising said block copolymer according to claim 1.

15. A molded polymer electrolyte product comprising said polymer electrolyte material according to claim 14.

16. A polymer electrolyte membrane produced using said polymer electrolyte material according to claim 14.

17. A catalyst coated membrane constituted using said molded polymer electrolyte membrane according to claim 16.

18. A membrane electrode assembly constituted using said polymer electrolyte membrane according to claim 16.

19. A polymer electrolyte fuel cell constituted using said polymer electrolyte membrane according to claim 16.

20. A water electrolysis hydrogen generator constituted using said polymer electrolyte membrane according to claim 16.
